# EUROPEAN PATENT APPLICATION

(11) **EP 4 588 714 A1**
(43) Date of publication of application: **23.07.2025**
(21) Application number: 23874248.0
(22) Date of filing: 21.06.2023
(51) Int. Cl.: B60L 53/30, H02J 7/02, B60L 53/64

(54) **CHARGING APPARATUS AND CHARGING SYSTEM**

(30) Priority: 08.10.2022 CN 202211222187
(71) Applicant: Huawei Digital Power Technologies Co., Ltd., Shenzhen, Guangdong 518043 (CN)
(72) Inventor: WANG, Yichang, Shenzhen, Guangdong 518043 (CN)
(74) Representative: Isarpatent
(86) International application number: PCT/CN2023/101774
(87) International publication number: WO 2024/074054

(57) **Abstract**

This application discloses a charging apparatus and a charging system. The charging apparatus includes a plurality of first alternating current power supply lines, a plurality of first circuit groups, a first direct current bus, a first switch circuit located on each first alternating current power supply line, and a phase sequence detection circuit connected to each first alternating current power supply line. Rectifier circuits in all the first circuit groups are connected to charging circuits in all the first circuit groups via the first direct current bus. The first direct current bus is designed in a pooling manner, so that a photovoltaic device and an energy storage device can be superimposed on the first direct current bus. In addition, the phase sequence detection circuit is used to detect whether phase sequences of the plurality of first alternating current power supply lines are consistent. When the phase sequences are consistent, all first switch circuits are connected, or when the phase sequences are inconsistent, all first switch circuits are disconnected, so that device damage caused by an incorrect cable connection can be avoided.

## Description

### CROSS-REFERENCE TO RELATED APPLICATIONS

This application claims priority to Chinese Patent Application No. 202211222187.0, filed with the China National Intellectual Property Administration on October 8, 2022 and entitled "CHARGING APPARATUS AND CHARGING SYSTEM", which is incorporated herein by reference in its entirety.

### TECHNICAL FIELD

This application relates to the field of electronic technologies, and in particular, to a charging apparatus and a charging system.

### BACKGROUND

With the rapid popularization of new energy vehicles, electric vehicle charging devices used as auxiliary facilities also develop rapidly. Currently, there are mainly two forms of charging devices: an integrated charging pile and a split-type charging pile. The split-type charging pile includes a split-type charging cabinet (also referred to as a split-type charging power unit) and a charging dispenser. The split-type charging cabinet is configured to: centralize a plurality of charging modules, and dynamically allocate, via a power allocation unit, the charging modules based on a charging power actually required by an electric vehicle. The charging dispenser is configured to perform information exchange, energy transmission, metering and billing, and the like with the electric vehicle, and mainly includes a housing, a human machine interface, a charging control unit, a metering and billing unit, and the like.

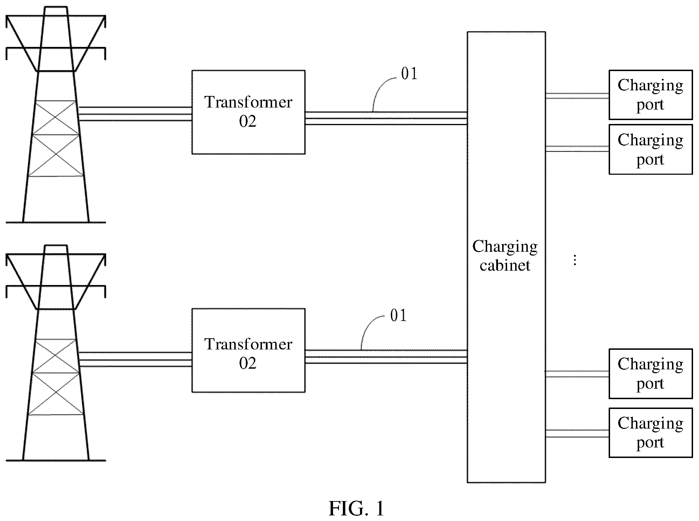

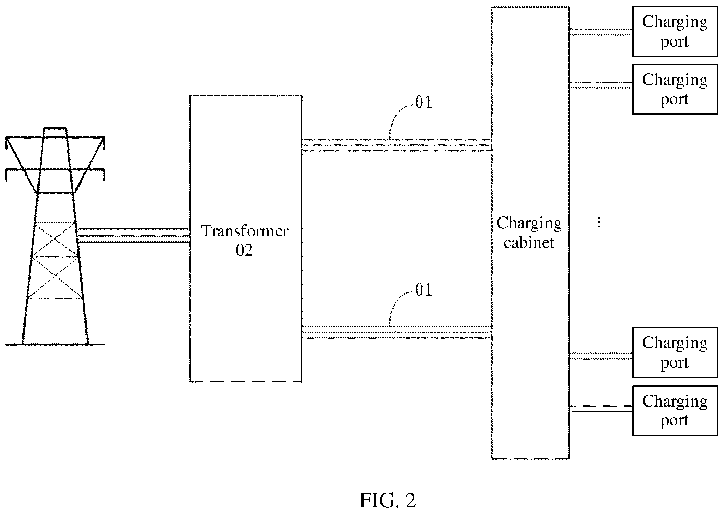

With the rapid growth of charging power requirements of the electric vehicles, powers of split-type charging cabinets in the current market are increasing, which are developed from early 240 kW power of a power unit to current up to 1 MW of a power unit. A larger charging power makes fast charging possible for the new energy vehicles. However, for alternating current input power supply, after a total power of a charging device becomes increasingly large, one alternating current power supply line usually cannot meet a power supply requirement of an entire cabinet due to limitation of a through-current capability, and a plurality of alternating current power supply circuits are usually required to supply power. A plurality of alternating current power supply lines 01 may be outputs from a plurality of different transformers 02 shown in FIG. 1 (in FIG. 1, two transformers 02 and two alternating current power supply lines 01 are used as an example for illustration), or may be outputs from different circuit breakers (not shown in FIG. 2) of a same transformer 02 shown in FIG. 2 (in FIG. 2, a single transformer 02 and two alternating current power supply lines 01 are used as an example for illustration).

### SUMMARY

This application provides a charging apparatus and a charging system. For a charging apparatus having a plurality of alternating current power supply lines, device damage caused by an incorrect cable connection can be avoided.

According to a first aspect, an embodiment of this application provides a charging apparatus. The charging apparatus includes a plurality of first alternating current power supply lines, a plurality of first circuit groups, a first direct current bus connected to all of the plurality of first circuit groups, a first switch circuit located between an input end and an output end of each of the plurality of first alternating current power supply lines, and a phase sequence detection circuit connected to each of the plurality of first alternating current power supply lines. The plurality of first alternating current power supply lines are connected to the plurality of first circuit groups in a one-to-one correspondence. In other words, each of the plurality of first alternating current power supply lines is separately correspondingly connected to one first circuit group, and each of the plurality of first circuit groups is separately correspondingly connected to one first alternating current power supply line. Each first circuit group includes a plurality of rectifier circuits and a plurality of charging circuits, and an input end of each of the plurality of rectifier circuits is connected to the output end of the corresponding first alternating current power supply line, to receive three-phase alternating current voltages provided by the first alternating current power supply line. An output end of each of the plurality of rectifier circuits is connected to the first direct current bus, and an input end of each of the plurality of charging circuits is connected to the first direct current bus. In other words, output ends of the plurality of rectifier circuits are all connected in parallel to the first direct current bus, and input ends of the plurality of charging circuits are all connected in parallel to the first direct current bus. Each first switch circuit is configured to: connect, when the first switch circuit is connected, the first alternating current power supply line to a power supply circuit of the corresponding first circuit group; and disconnect, when the first switch circuit is disconnected, the first alternating current power supply line from the power supply circuit of the corresponding first circuit group. The phase sequence detection circuit is connected between the input end of each first alternating current power supply line and the first switch circuit, and the phase sequence detection circuit is configured to check whether voltage phase sequences on same phase wires of the plurality of first alternating current power supply lines are consistent. If the voltage phase sequences on the same phase wires of the plurality of first alternating current power supply lines are all consistent, all first switch circuits are controlled to be connected; or if the voltage phase sequences on the same phase wires of the plurality of first alternating current power supply lines are inconsistent, all first switch circuits are controlled to be disconnected.

According to the charging apparatus according to embodiments of this application, rectifier circuits in all the first circuit groups are all connected to charging circuits in all the first circuit groups via the first direct current bus. The first direct current bus is designed in a pooling manner, so that a photovoltaic device and an energy storage device can be superimposed on the first direct current bus. In addition, a method for superposing the photovoltaic device and the energy storage device is simple, cost-effective, and efficient. In addition, the phase sequence detection circuit is used to detect whether phase sequences of the plurality of first alternating current power supply lines are consistent. When the phase sequences are consistent, all the first switch circuits are connected, or when the phase sequences are inconsistent, all the first switch circuits are disconnected, so that device damage caused by an incorrect cable connection can be avoided.

During specific implementation, a quantity of the first alternating current power supply lines and a quantity of the first circuit groups are not limited in this application. There may be two first alternating current power supply lines and two first circuit groups, three first alternating current power supply lines and three first circuit groups, or more first alternating current power supply lines and more first circuit groups. In the accompanying drawings of this specification, the two first alternating current power supply lines and the two first circuit groups are used as an example for schematic description.

During specific implementation, the input end of the first alternating current power supply line is configured to connect to a power supply, to receive the three-phase alternating current voltages provided by the power supply. The three-phase alternating current voltages refer to three voltages that have a same frequency, an equal electric potential amplitude, and a phase difference of 120 degrees between each other. In this application, the first alternating current power supply line includes at least three phase wires: a first phase wire, a second phase wire, and a third phase wire. Each phase wire is configured to receive a corresponding one-phase alternating current voltage. During specific implementation, the first alternating current power supply line is usually in a three-phase five-wire system. In other words, in addition to the three phase wires, the first alternating current power supply line further includes a neutral wire (also referred to as a neutral cable) and a ground cable (also referred to as a protection ground cable). When the first switch circuit is connected, the first alternating current power supply line provides the received three-phase alternating current voltages for the corresponding first circuit group.

In this application, a phase sequence is a sequence of three-phase alternating currents, and is determined based on a phase difference. For example, A, B, and C are used to represent the three-phase alternating currents respectively. A phase-A alternating current is 120 degrees ahead of a phase-B alternating current, the phase-B alternating current is 120 degrees ahead of a phase-C alternating current, and the phase-C alternating current is 120 degrees ahead of the phase-A alternating current. The phase sequences of the plurality of first alternating current power supply lines being the same means that in the plurality of first alternating current power supply lines, a phase difference between the first phase wire and the second phase wire is the same, a phase difference between the second phase wire and the third phase wire is the same, and a phase difference between the third phase wire and the first phase wire is the same. For example, phase-A alternating currents are on all first phase wires of the plurality of first alternating current power supply lines, phase-B alternating currents are on all second phase wires of the plurality of first alternating current power supply lines, and phase-C alternating currents are on all third phase wires of the plurality of first alternating current power supply lines.

During specific implementation, the plurality of rectifier circuits and the plurality of charging circuits in each first circuit group are disposed in a split manner. The split disposition herein is relative to integral disposition, and means that the plurality of rectifier circuits and the plurality of charging circuits are physically independent of each other. For example, the plurality of rectifier circuits are also disposed in the split manner, and the plurality of charging circuits are also disposed in the split manner.

The input end of each of the plurality of rectifier circuits is connected to the output end of the corresponding first alternating current power supply line, to receive the three-phase alternating current voltages provided by the first alternating current power supply line. The output end of each of the plurality of rectifier circuits is connected to the first direct current bus, and the input end of each of the plurality of charging circuits is connected to the first direct current bus. In other words, the output ends of the plurality of rectifier circuits are all connected in parallel to the first direct current bus, and the input ends of the plurality of charging circuits are all connected in parallel to the first direct current bus. The first direct current bus usually includes a positive bus and a negative bus. Each rectifier circuit is configured to convert the three-phase alternating current voltages provided by the first alternating current power supply line into a direct current voltage that matches the first direct current bus. For example, the three-phase alternating current voltages are three-phase alternating current voltages of 380 V, the direct current voltage that matches the first direct current bus is a direct current voltage of 820 V, and the rectifier circuit may convert the three-phase alternating current voltages of 380 V into the direct current voltage of 820 V. Each charging circuit is configured to: convert the direct current voltage on the first direct current bus into a target direct current voltage having a specified current and a specified voltage, and output the target direct current voltage. For example, the charging circuit converts the direct current voltage of 820 V into a voltage and a current that are required by an electric vehicle, to stably charge the electric vehicle. In this application, direct current voltages output by all the rectifier circuits are pooled via the first direct current bus and then enter each charging circuit.

A quantity of rectifier circuits in this application may be configured based on a power of the three-phase alternating current voltages on the first alternating current power supply line. For example, the power of the three-phase alternating current voltages is 720 kW, a conversion power of each rectifier circuit is 120 kW, and six rectifier circuits may be configured.

A quantity of charging circuits is not limited in this application. The quantity of charging circuits may be the same as the quantity of rectifier circuits, or certainly may be different from the quantity of rectifier circuits. For example, the quantity of charging circuits is greater than or equal to the quantity of rectifier circuits.

In some examples, the rectifier circuit may include an AC-DC conversion circuit, and no transformer is disposed in the AC-DC conversion circuit, so that high efficiency and low loss of the rectifier circuit can be ensured. The charging circuit may include a DC-DC conversion circuit, and a transformer is disposed in the DC-DC conversion circuit, so that charging safety can be ensured.

For example, the first switch circuit may include three switches, and one switch is disposed on each phase wire. Certainly, during specific implementation, the first switch circuit may further include switches disposed on the neutral wire and/or the ground cable. This is not limited herein. Usually, the switches may not be disposed for the neutral wire and the ground cable.

In some examples, the switch in the first switch circuit may be a common switch, for example, a circuit breaker, a relay, or a contactor, in an electric power system. This is not limited herein.

For example, the phase sequence detection circuit is further configured to: if the voltage phase sequences on the same phase wires of the plurality of first alternating current power supply lines are inconsistent, initiate a reminder message indicating that phase sequences of three-phase alternating current voltages on the plurality of first alternating current power supply lines are inconsistent, to prompt an incorrect cable connection.

In a possible design, the phase sequence detection circuit may include a comparator circuit, a control circuit, and a plurality of voltage collection circuits corresponding to the plurality of first alternating current power supply lines.

In a feasible implementation, each first alternating current power supply line corresponds to one voltage collection circuit, each voltage collection circuit is connected to two phase wires of the corresponding first alternating current power supply line, the two phase wires that are connected to different voltage collection circuits and that are of first alternating current power supply lines are the same, and each voltage collection circuit is configured to collect a voltage signal between the two phase wires. During specific implementation, the two phase wires connected to the voltage collection circuit may be any two of the first phase wire, the second phase wire, and the third phase wire. However, for example, once the voltage collection circuit determines the two connected phase wires, two phase wires connected to another voltage collection circuit are definitely two phase wires with a same phase sequence in the corresponding first alternating current power supply line.

In another feasible implementation, each first alternating current power supply line corresponds to two voltage collection circuits, the two voltage collection circuits are both connected to the neutral wire and one phase wire of the corresponding first alternating current power supply line, and each voltage collection circuit is configured to collect a voltage signal between the phase wire and the neutral wire N. The two voltage collection circuits connected to the same first alternating current power supply line are connected to different phase wires of the first alternating current power supply line, and the two phase wires that are connected to the two voltage collection circuits connected to different first alternating current power supply lines and that are of the first alternating current power supply lines are the same.

In embodiments of this application, after the voltage collection circuit sends the collected voltage signal to the comparator circuit, the comparator circuit determines, based on the voltage signal collected by each voltage collection circuit, whether waveforms of voltage signals corresponding to the same phase wires of the plurality of first alternating current power supply lines are consistent; and if the waveforms of the voltage signals corresponding to the same phase wires of the plurality of first alternating current power supply lines are consistent, sends first control information to the control circuit, or if the waveforms of the voltage signals corresponding to the same phase wires of the plurality of first alternating current power supply lines are inconsistent, sends second control information to the control circuit. The control circuit controls, after receiving the first control information sent by the comparator circuit, the first switch circuit to be connected, or controls, after receiving the second control information, the first switch circuit to be disconnected.

During specific implementation, when each first alternating current power supply line corresponds to the two voltage collection circuits, for the two voltage collection circuits of different first alternating current power supply lines, the comparator circuit compares the voltage signals collected by the voltage collection circuits that are connected to different first alternating current power supply lines and that are connected to the same phase wires. For example, the comparator circuit compares voltage signals collected by the voltage collection circuits separately connected to first phase wires in different first alternating current power supply lines, and compares voltage signals collected by the voltage collection circuits separately connected to second phase wires in different first alternating current power supply lines. If two groups of comparison results are both that voltage waveforms are consistent, it is considered that the waveforms of the voltage signals corresponding to the same phase wires in the plurality of first alternating current power supply lines are all consistent. If waveforms of at least one of two groups of comparison results are inconsistent, it is considered that phase sequences of the voltage signals corresponding to the same phase wires in the plurality of first alternating current power supply lines are inconsistent.

Further, for ease of comparison, each voltage collection circuit may further convert the collected voltage signal into a digital signal, and send the digital signal to the comparator circuit. The comparator circuit may compare, based on the received digital signal sent by each voltage collection circuit, whether digital signals sent by different voltage collection circuits that are connected to the same phase wires of the plurality of first alternating current power supply lines are consistent; and if the digital signals sent by different voltage collection circuits that are connected to the same phase wires of the plurality of first alternating current power supply lines are consistent, send the first control information to the control circuit; or if the digital signals sent by different voltage collection circuits that are connected to the same phase wires of the plurality of first alternating current power supply lines are inconsistent, send the second control information to the control circuit.

In this application, that two digital signals are consistent means that the two digital signals have a same value at any moment.

A specific structure of the voltage collection circuit is not limited in this application. For example, the voltage collection circuit may include a first resistor, a second resistor, a third resistor, a fourth resistor, a fifth resistor, a first diode, a first transistor, and an optical coupler. The first resistor is connected in series between a first input end of the voltage collection circuit and a negative electrode of the first diode. The second resistor is connected in series between a second input end of the voltage collection circuit and a positive electrode of the first diode. The negative electrode of the diode is further connected to a positive electrode of a photodiode in the optical coupler, and the positive electrode of the first diode is connected to a negative input end of the photodiode in the optical coupler. A collector of a transistor in the optical coupler is connected to a first reference voltage end, and an emitter of the transistor in the optical coupler is connected to a first end of the third resistor. A base of the first transistor is connected to a second end of the third resistor, a collector of the first transistor is connected to a first end of the fourth resistor and an output end of the voltage collection circuit, and an emitter of the first transistor is connected to a second reference voltage end. A second end of the fourth resistor is connected to the first reference voltage end. A first end of the fifth resistor is connected to the base of the first transistor, and a second end of the fifth resistor is connected to the emitter of the first transistor. A voltage at the second reference voltage end is greater than a voltage at the first reference voltage end. Certainly, during specific implementation, the voltage at the second reference voltage end may alternatively be less than the voltage at the first reference voltage end. This is not limited herein.

An example in which the voltage at the second reference voltage end is greater than the voltage at the first reference voltage end is used. A working principle of the voltage collection circuit is as follows: A voltage signal between the first input end and the second input end of the voltage collection circuit is a sine wave signal, a positive half-cycle signal of the sine wave signal may drive the photodiode in the optical coupler to emit light, and the transistor in the optical coupler outputs a photocurrent to control the first transistor to output a high potential voltage. A negative half-cycle signal of the sine wave signal can pass through only the first diode to drive the photodiode in the optical coupler not to emit light, and the first transistor to output a low potential voltage to convert a voltage signal of a sine wave into a digital signal.

In this application, the control circuit may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the control circuit may be a combination implementing a computing function, for example, a combination of one or more microprocessors, or a combination of a DSP and a microprocessor.

In some examples, the charging apparatus may further include a first photovoltaic device connected to the first direct current bus. The first photovoltaic device may convert light energy into electric energy and provide the electric energy for the first direct current bus. In this way, not only an electric capacity of the charging apparatus can be increased, but also the electric energy provided by the first photovoltaic device can be preferentially used in the daytime. Alternatively, it is considered that electricity prices are different in different time periods, for example, electricity prices in the daytime are far higher than electricity prices in the nighttime. The charging apparatus may further include a first energy storage device connected to the first direct current bus, the first energy storage device may store electric energy when the electricity prices are low, and when the electricity prices are high, the electric energy stored in the first energy storage device is preferentially used.

For example, the first direct current bus of the charging apparatus is connected to the first photovoltaic device and the first energy storage device. The first energy storage device may not only store electric energy of a power grid, but also store the electric energy of the first photovoltaic device.

A specific implementation of the first photovoltaic device is not limited in this application, and may be any manner that can implement a photovoltaic function.

A specific implementation of the first energy storage device is not limited in this application, and may be any manner that can implement a storage function.

For example, the charging apparatus may further include a plurality of charging ports and a switch matrix. The switch matrix is connected to each charging circuit and the plurality of charging ports. The switch matrix is configured to: perform group scheduling on the direct current voltage output by each charging circuit, and correspondingly output scheduled direct current voltages to at least two charging ports.

In some examples, the charging apparatus may further include at least one second photovoltaic device and/or at least one second energy storage device, and at least one second direct current bus is connected to the second photovoltaic device and/or the second energy storage device. The second photovoltaic device may convert light energy into electric energy and provide the electric energy for the second direct current bus. In this way, not only the electric capacity of the charging apparatus can be increased, but also the electric energy provided by the first photovoltaic device can be preferentially used in the daytime. It is considered that the electricity prices are different in different time periods, for example, the electricity prices in the daytime are far higher than the electricity prices in the nighttime. The second energy storage device may store electric energy when the electricity prices are low, and when the electricity prices are high, the electric energy stored in the second energy storage device is preferentially used. The second energy storage device may not only store the electric energy of the power grid, but also store the electric energy of the second photovoltaic device.

A specific implementation of the second photovoltaic device is not limited in this application, and may be any manner that can implement the photovoltaic function.

A specific implementation of the second energy storage device is not limited in this application, and may be any manner that can implement the storage function.

For example, the charging apparatus may further include a second switch circuit located on at least one second alternating current power supply line. Each second switch circuit is configured to: connect, when the second switch circuit is connected, the second alternating current power supply line to a power supply circuit of a corresponding second circuit group; and disconnect, when the second switch circuit is disconnected, the second alternating current power supply line from the power supply circuit of the corresponding first circuit group. In this way, after an input end of the second alternating current power supply line is connected to the power supply, the second switch circuit may be used to control a charging system to be powered on/off.

For example, the second switch circuit may include three switches, and one switch is disposed on each phase wire. Certainly, during specific implementation, the second switch circuit may further include switches disposed on the neutral wire and/or the ground cable. This is not limited herein. Usually, the switches may not be disposed for the neutral wire and the ground cable.

For example, the switch in the second switch circuit may be a common switch, for example, a circuit breaker, a relay, or a contactor, in an electric power system. This is not limited herein.

According to a second aspect, an embodiment of this application further provides another charging apparatus. The charging apparatus may include a plurality of second alternating current power supply lines, a plurality of second circuit groups, and a plurality of second direct current buses. The plurality of second alternating current power supply lines are connected to the plurality of second circuit groups in a one-to-one correspondence. In other words, each of the plurality of second alternating current power supply lines is separately correspondingly connected to one second circuit group, and each of the plurality of first circuit groups is separately correspondingly connected to one first alternating current power supply line. The plurality of second circuit groups are connected to the plurality of second direct current buses in a one-to-one correspondence. In other words, each of the plurality of second circuit groups is separately correspondingly connected to one second direct current bus, and each of the plurality of second direct current buses is separately correspondingly connected to one second circuit group. Each second circuit group includes a plurality of rectifier circuits and a plurality of charging circuits. During specific implementation, an input end of the second alternating current power supply line is configured to connect to a power supply, to receive three-phase alternating current voltages provided by the power supply. An input end of each of the plurality of rectifier circuits in the second circuit group is connected to an output end of the corresponding second alternating current power supply line, to receive the three-phase alternating current voltages provided by the second alternating current power supply line. An output end of each rectifier circuit in the second circuit group is connected to the corresponding second direct current bus, and an input end of each charging circuit in the second circuit group is connected to the corresponding second direct current bus. In other words, output ends of the plurality of rectifier circuits in the same second circuit group are all connected in parallel to the corresponding second direct current bus, and input ends of the plurality of charging circuits in the same second circuit group are all connected in parallel to the corresponding second direct current bus. In this application, all direct current voltages output by all the rectifier circuits in the same second circuit group enter each charging circuit in the second circuit group after the direct current voltages are pooled via the corresponding second direct current bus. In this application, different second alternating current power supply lines are connected to different second direct current buses. Therefore, different second alternating current power supply lines are isolated from each other, and a circulating current is not formed even if the lines are incorrectly connected.

During specific implementation, a quantity of the second alternating current power supply lines and a quantity of the second circuit groups are not limited in this application. There may be two second alternating current power supply lines and two second circuit groups, three second alternating current power supply lines and three second circuit groups, or more second alternating current power supply lines and more second circuit groups. In the accompanying drawings of this specification, the two second alternating current power supply lines and the two second circuit groups are used as an example for schematic description.

The plurality of rectifier circuits and the plurality of charging circuits in each second circuit group are disposed in a split manner. The split disposition herein is relative to integral disposition, and means that the plurality of rectifier circuits and the plurality of charging circuits are physically independent of each other. For example, the plurality of rectifier circuits are also disposed in the split manner, and the plurality of charging circuits are also disposed in the split manner.

The second direct current bus usually includes a positive bus and a negative bus. Each rectifier circuit is configured to convert the three-phase alternating current voltages provided by the second alternating current power supply line into a direct current voltage that matches the second direct current bus. For example, the three-phase alternating current voltages are three-phase alternating current voltages of 380 V, the direct current voltage that matches the second direct current bus is a direct current voltage of 820 V, and the rectifier circuit may convert the three-phase alternating current voltages of 380 V into the direct current voltage of 820 V. Each charging circuit is configured to: convert the direct current voltage on the corresponding second direct current bus into a target direct current voltage having a specified current and a specified voltage, and output the target direct current voltage. For example, the charging circuit converts the direct current voltage of 820 V into a voltage and a current that are required by an electric vehicle, to stably charge the electric vehicle.

A quantity of rectifier circuits in this application may be set based on a power of the three-phase alternating current voltages on the second alternating current power supply line. For example, the power of the three-phase alternating current voltages is 720 kW, a conversion power of each rectifier circuit is 120 kW, and six rectifier circuits may be set.

A quantity of charging circuits is not limited in this application. The quantity of charging circuits may be the same as the quantity of rectifier circuits, or certainly may be different from the quantity of rectifier circuits. For example, the quantity of charging circuits is greater than or equal to the quantity of rectifier circuits.

For example, the rectifier circuit may include an AC-DC conversion circuit, and the charging circuit may include a DC-DC conversion circuit.

For example, the charging apparatus may further include at least one second photovoltaic device and/or at least one second energy storage device, and at least one second direct current bus is connected to the second photovoltaic device and/or the second energy storage device. The second photovoltaic device may convert light energy into electric energy and provide the electric energy for the second direct current bus. In this way, not only an electric capacity of the charging apparatus can be increased, but also the electric energy provided by the first photovoltaic device can be preferentially used in the daytime. It is considered that electricity prices are different in different time periods, for example, electricity prices in the daytime are far higher than electricity prices in the nighttime. The second energy storage device may store electric energy when the electricity prices are low, and when the electricity prices are high, the electric energy stored in the second energy storage device is preferentially used. The second energy storage device may not only store electric energy of a power grid, but also store the electric energy of the second photovoltaic device.

A specific implementation of the second photovoltaic device is not limited in this application, and may be any manner that can implement a photovoltaic function.

A specific implementation of the second energy storage device is not limited in this application, and may be any manner that can implement a storage function.

For example, the charging apparatus may further include a plurality of charging ports and a switch matrix. The switch matrix is connected to each charging circuit and the plurality of charging ports. The switch matrix is configured to: perform group scheduling on the direct current voltage output by each charging circuit, and correspondingly output scheduled direct current voltages to at least two charging ports.

For example, the charging apparatus may further include a second switch circuit located on at least one second alternating current power supply line. Each second switch circuit is configured to: connect, when the second switch circuit is connected, the second alternating current power supply line to a power supply circuit of the corresponding second circuit group; and disconnect, when the second switch circuit is disconnected, the second alternating current power supply line from the power supply circuit of the corresponding first circuit group. In this way, after the input end of the second alternating current power supply line is connected to the power supply, the second switch circuit may be used to control a charging system to be powered on/off.

For example, the second switch circuit may include three switches, and one switch is disposed on each phase wire. Certainly, during specific implementation, the second switch circuit may further include switches disposed on a neutral wire and/or a ground cable. This is not limited herein. Usually, the switches may not be disposed for the neutral wire and the ground cable.

For example, the switch in the second switch circuit may be a common switch, for example, a circuit breaker, a relay, or a contactor, in an electric power system. This is not limited herein.

According to a third aspect, an embodiment of this application further provides a charging system. The charging system may include a charging apparatus and at least one charging dispenser connected to the charging apparatus. The charging apparatus may be the charging apparatus according to various implementations of the first aspect or the second aspect. Each of the at least one charging dispenser is separately configured to connect to an electric vehicle, and the charging apparatus may charge, via each charging dispenser, the electric vehicle connected to the charging dispenser. Each charging dispenser is connected to at least one charging circuit in the charging apparatus. In an embodiment, the charging apparatus further includes a charging port, and the charging apparatus may be connected to the charging dispenser via the charging port. When the charging apparatus is connected to a power supply, if there is an incorrect cable connection, a case in which the charging apparatus has a plurality of first alternating current power supply lines may be detected via a phase sequence detection circuit. In a case in which the charging apparatus has a plurality of second alternating current power supply lines, the plurality of second alternating current power supply lines are isolated from each other. Therefore, a circulating current does not occur even if the lines are incorrectly connected. In a case in which the charging apparatus has the first alternating current power supply line and the second alternating current power supply line, the first alternating current power supply line and the second alternating current power supply line are isolated from each other. Therefore, a circulating current does not occur even if the lines are incorrectly connected.

A quantity of charging dispensers is not limited in this application, and may be specifically set based on a quantity of charging ports. Usually, one charging port corresponds to one charging dispenser. The charging port of the charging apparatus is connected to the corresponding charging dispenser. When the electric vehicle needs to be charged, the electric vehicle is connected to the charging dispenser.

For example, the charging dispenser may include a housing, a human machine interface, a charging control unit, a metering and billing unit, and the like. The charging dispenser is configured to perform information exchange, energy transmission, metering and billing, and the like with the electric vehicle.

For example, the charging system may further include at least one electric vehicle connected to the at least one charging dispenser, so that the charging apparatus charges the electric vehicle via the charging dispenser.

For technical effect that can be achieved in the third aspect, refer to the descriptions of technical effect that can be achieved in any possible design of the first aspect and the second aspect. Details are not described herein again.

### BRIEF DESCRIPTION OF DRAWINGS

FIG. 1 is a diagram of a scenario in which two transformers supply power;
FIG. 2 is a diagram of a scenario in which one transformer supplies power;
FIG. 3 is a schematic of a structure of a split-type charging cabinet in an integrated module architecture;
FIG. 4 is a schematic of a structure of a split-type charging cabinet in a split-type module architecture;
FIG. 5 is a schematic of a structure of a charging apparatus according to an embodiment of this application;
FIG. 6 is a schematic flowchart of performing phase sequence detection by a phase sequence detection circuit according to this application;
FIG. 7 is a schematic of a structure of a charging apparatus according to another embodiment of this application;
FIG. 8 is a schematic of a structure of a charging apparatus according to another embodiment of this application;
FIG. 9 is a schematic of a structure of a charging apparatus according to another embodiment of this application;
FIG. 10 is a schematic of a structure of a charging apparatus according to another embodiment of this application;
FIG. 11 is a schematic of a structure of a charging apparatus according to another embodiment of this application;
FIG. 12 is a schematic of a structure of a charging apparatus according to another embodiment of this application;
FIG. 13 is a schematic of a structure of a voltage collection circuit according to an embodiment of this application;
FIG. 14 is a diagram of an input waveform and an output waveform of the voltage collection circuit shown in FIG. 13;
FIG. 15 is a schematic of a structure of a charging apparatus according to another embodiment of this application;
FIG. 16 is a schematic of a structure of a charging apparatus according to another embodiment of this application;
FIG. 17 is a schematic of a structure of a charging apparatus according to another embodiment of this application;
FIG. 18 is a schematic of a structure of a charging apparatus according to another embodiment of this application; and
FIG. 19 is a diagram of a structure of a charging system according to an embodiment of this application.

### Reference numerals:

10: charging system; 20: power supply; 100: charging apparatus; 200: electric vehicle; 300: charging dispenser; 110: first alternating current power supply line; 120: first circuit group; 130: first direct current bus; 140: first switch circuit; 150: phase sequence detection circuit; 151: voltage collection circuit; 152: comparator circuit; 153: control circuit; 160: first photovoltaic device; 170: first energy storage device; 180: charging port; 190: switch matrix; 210: second alternating current power supply line; 220: second circuit group; 230: second direct current bus; 240: second switch circuit; 121 and 221: rectifier circuits; 122 and 222: charging circuits; 141 and 241: switches; 250: second photovoltaic device; 260: second energy storage device; R1: first resistor; R2: second resistor; R3: third resistor; R4: fourth resistor; R5: fifth resistor; D1: first diode; Q1: first transistor; U1: optical coupler; Sin1: first input end of the voltage collection circuit; Sin2: second input end of the voltage collection circuit; Sout: output end of the voltage collection circuit; V1: first reference voltage end; V2: second reference voltage end; L1: first phase wire; L2: second phase wire; L3: third phase wire; and N: neutral wire.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of this application, "a plurality of" may also be understood as "at least two". In addition, it should be understood that, in the descriptions of this application, terms such as "first" and "second" are merely used for distinguishing and description, cannot be understood as an indication or implication of relative importance, and cannot be understood as an indication or implication of a sequence.

It should be noted that, "connection" in embodiments of this application refers to an electrical connection, and a connection between two electrical elements may be a direct or indirect connection between the two electrical elements. For example, a connection between A and B may be a direct connection between A and B, or may be an indirect connection between A and B via one or more other electrical elements. For example, that A is connected to B may also be that A is directly connected to C, C is directly connected to B, A and B are connected via C.

With the rapid growth of charging power requirements of the electric vehicles, powers of split-type charging cabinets in the current market are increasing, which are developed from early 240 kW power of a power unit to current up to 1 MW power of a power unit. However, for alternating current input power supply, after a total power of a charging device becomes increasingly large, one alternating current power supply line usually cannot meet power supply of an entire cabinet due to limitation of a through-current capability, and a plurality of alternating current power supply lines are usually required to supply power. A plurality of alternating current power supply lines 01 may be outputs from a plurality of different transformers 02 shown in FIG. 1 (in FIG. 1, two transformers 02 and two alternating current power supply lines 01 are used as an example for illustration), or may be outputs from different circuit breakers (not shown in FIG. 2) of a same transformer 02 shown in FIG. 2 (in FIG. 2, a single transformer 02 and two alternating current power supply lines 01 are used as an example for illustration).

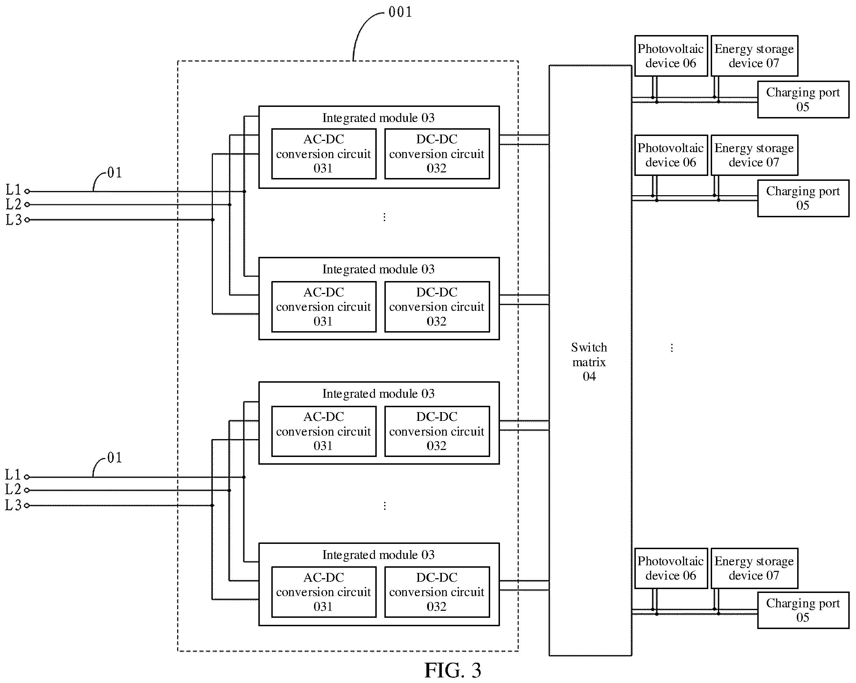

A current split-type charging cabinet is mainly in an integrated module architecture. As shown in FIG. 3, a split-type charging cabinet 001 includes a plurality of integrated modules 03, and each integrated module 03 includes an AC-DC conversion circuit 031 and a DC-DC conversion circuit 032. The AC-DC conversion circuit 031 is configured to convert an alternating current output by the alternating current power supply line 01 into a direct current. The DC-DC conversion circuit 032 is configured to: adjust, to a target charging voltage, the direct current obtained through conversion by the AC-DC conversion circuit 031, and allocate the target charging voltage to different charging ports 05 via a switch (not shown in the figure) in a switch matrix 04. As a charging power gradually increases, superimposing a photovoltaic device and an energy storage device in a charging device has become a future development trend. Currently, there are mainly two solutions for superimposing the photovoltaic device and the energy storage device. In a first solution shown in FIG. 3, a photovoltaic device 06 and an energy storage device 07 are superimposed on a cable between the switch matrix 04 and each charging port 05. In a second solution, the photovoltaic device 06 and the energy storage device 07 are disposed before an input end of the switch matrix 04, and a switch matrix needs to be additionally added to switch, to the original switch matrix 04, voltages output by the photovoltaic device 06 and the energy storage device 07. Therefore, when a charging device in the integrated module architecture is used, a solution for superposing the photovoltaic device and the energy storage device is complex, and has high costs and low efficiency.

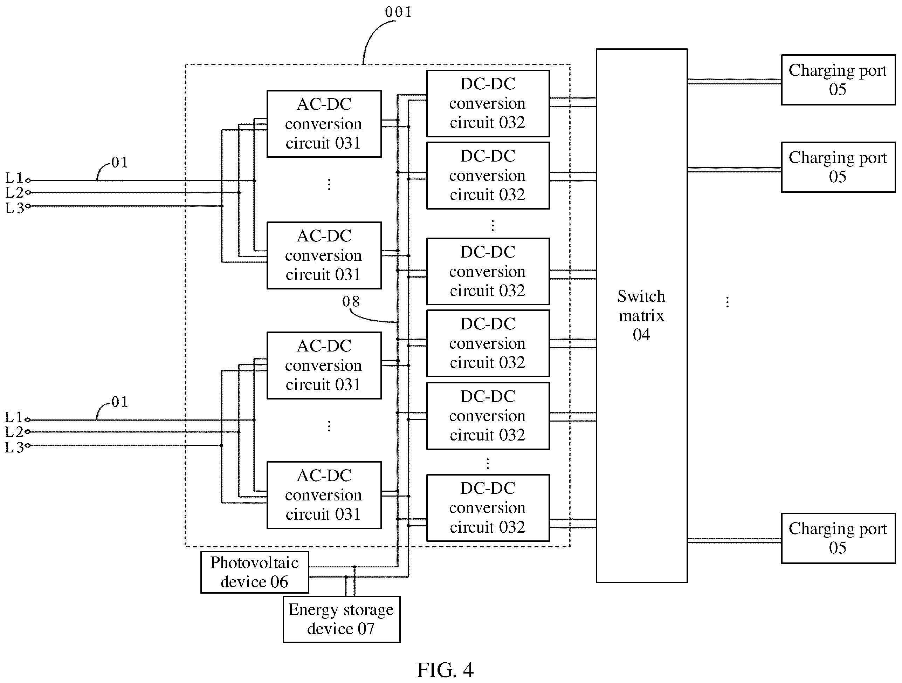

A related technology proposes a split-type charging cabinet in a split-type module architecture, where the split-type module architecture is also referred to as a direct current bus architecture. As shown in FIG. 4, the split-type charging cabinet 001 includes a plurality of AC-DC conversion circuits 031 and a plurality of DC-DC conversion circuits 032 that are disposed in a split manner, and output ends of all the AC-DC conversion circuits 031 and input ends of all the DC-DC conversion circuits 032 are connected to each other via a direct current bus 08. The photovoltaic device 06 and the energy storage device 07 are directly superimposed on the direct current bus 08. The solution for superposing the photovoltaic device and the energy storage device is simple and efficient, and has low costs; and therefore, attracts increasingly more attention in the industry.

However, in the direct current bus architecture, because there is no transformer between the direct current bus and the alternating current power supply line, the direct current bus is a non-isolated direct current bus. In this case, phase sequences of three-phase alternating current voltages on the plurality of alternating current power supply lines need to be completely consistent to avoid a circulating current. However, during device installation, commissioning, and construction, phase sequences of cable connections of the plurality of alternating current power supply lines cannot be completely the same due to non-standard operations. As a result, the system is burnt or the like.

In view of this, an embodiment of this application provides a charging apparatus 100. The charging apparatus 100 can avoid device damage caused by an incorrect cable connection. To make the objectives, technical solutions, and advantages of this application clearer, the following further describes this application in detail with reference to the accompanying drawings.

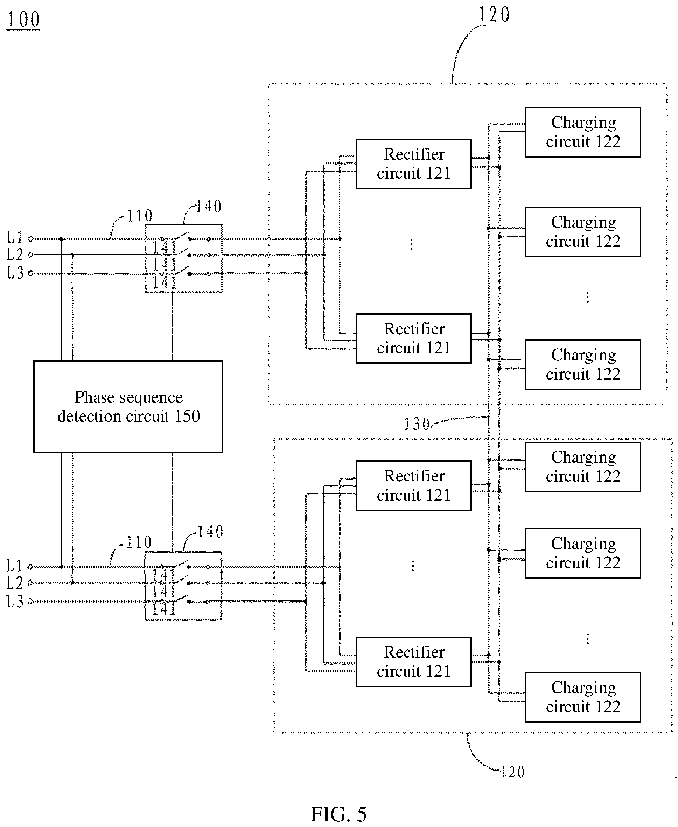

FIG. 5 is a schematic of a structure of the charging apparatus 100 according to an embodiment of this application. The charging apparatus 100 mainly includes a plurality of first alternating current power supply lines 110, a plurality of first circuit groups 120, a first direct current bus 130 connected to all of the plurality of first circuit groups 120, a first switch circuit 140 located between an input end and an output end of each of the plurality of first alternating current power supply lines 110, and a phase sequence detection circuit 150 connected to each of the plurality of first alternating current power supply lines 110.

The plurality of first alternating current power supply lines 110 are connected to the plurality of first circuit groups 120 in a one-to-one correspondence. In other words, each of the plurality of first alternating current power supply lines 110 is separately correspondingly connected to one first circuit group 120, and each of the plurality of first circuit groups 120 is separately correspondingly connected to one first alternating current power supply line 110. During specific implementation, a quantity of the first alternating current power supply lines 110 and a quantity of the first circuit groups 120 are not limited in this application. There may be two first alternating current power supply lines 110 and two first circuit groups 120, three first alternating current power supply lines 110 and three first circuit groups 120, or more first alternating current power supply lines 110 and more first circuit groups 120. In the accompanying drawings of this specification, the two first alternating current power supply lines 110 and the two first circuit groups 120 are used as an example for schematic description.

During specific implementation, the input end of the first alternating current power supply line 110 is configured to connect to a power supply (not shown in the figure), to receive three-phase alternating current voltages provided by the power supply. The power supply is configured to provide the three-phase alternating current voltages for the charging apparatus 100, for example, may be a power grid. The three-phase alternating current voltages refer to three voltages that have a same frequency, an equal electric potential amplitude, and a phase difference of 120 degrees between each other. In this application, the first alternating current power supply line 110 includes at least three phase wires: a first phase wire L1, a second phase wire L2, and a third phase wire L3. Each phase wire is configured to receive a corresponding one-phase alternating current voltage. During specific implementation, the first alternating current power supply line 110 is usually in a three-phase five-wire system. In other words, in addition to the three phase wires L1 to L3, the first alternating current power supply line 110 further includes a neutral wire (also referred to as a neutral cable) and a ground cable (also referred to as a protection ground cable). When the first switch circuit 140 is connected, the first alternating current power supply line 110 provides the received three-phase alternating current voltages for the corresponding first circuit group 120.

Each first circuit group 120 includes a plurality of rectifier circuits 121 and a plurality of charging circuits 122, and the plurality of rectifier circuits 121 and the plurality of charging circuits 122 may be disposed in a split manner. The split disposition herein is relative to integral disposition, and means that the plurality of rectifier circuits 121 and the plurality of charging circuits 122 are physically independent of each other. For example, the plurality of rectifier circuits 121 are also disposed in the split manner, and the plurality of charging circuits 122 are also disposed in the split manner.

The input end of each of the plurality of rectifier circuits 121 is connected to the output end of the corresponding first alternating current power supply line 110, to receive the three-phase alternating current voltages provided by the first alternating current power supply line 110. The output end of each of the plurality of rectifier circuits 121 is connected to the first direct current bus 130, and the input end of each of the plurality of charging circuits 122 is connected to the first direct current bus 130. In other words, output ends of the plurality of rectifier circuits 121 are all connected in parallel to the first direct current bus 130, and input ends of the plurality of charging circuits 122 are all connected in parallel to the first direct current bus 130. Refer to FIG. 5. The first direct current bus 130 usually includes a positive bus and a negative bus. Each rectifier circuit 121 is configured to convert the three-phase alternating current voltages provided by the first alternating current power supply line 110 into a direct current voltage that matches the first direct current bus 130. For example, the three-phase alternating current voltages are three-phase alternating current voltages of 380 V, the direct current voltage that matches the first direct current bus 130 is a direct current voltage of 820 V, and the rectifier circuit 121 may convert the three-phase alternating current voltages of 380 V into the direct current voltage of 820 V. Each charging circuit 122 is configured to: convert the direct current voltage on the first direct current bus 130 into a target direct current voltage having a specified current and a specified voltage, and output the target direct current voltage. For example, the charging circuit 122 converts the direct current voltage of 820 V into a voltage and a current that are required by an electric vehicle, to stably charge the electric vehicle. In this application, direct current voltages output by all the rectifier circuits 121 are pooled via the first direct current bus 130 and then enter each charging circuit 122.

A quantity of rectifier circuits 121 in this application may be configured based on a power of the three-phase alternating current voltages on the first alternating current power supply line 110. For example, the power of the three-phase alternating current voltages is 720 kW, a conversion power of each rectifier circuit 121 is 120 kW, and six rectifier circuits 121 may be configured.

A quantity of charging circuits 122 is not limited in this application. The quantity of charging circuits 122 may be the same as the quantity of rectifier circuits 121, or certainly may be different from the quantity of rectifier circuits 121. For example, the quantity of charging circuits 122 is greater than or equal to the quantity of rectifier circuits 121.

For example, the rectifier circuit 121 may include an alternating current-direct current AC-DC conversion circuit, and no transformer is disposed in the AC-DC conversion circuit, so that high efficiency and low loss of the rectifier circuit 121 can be ensured. The charging circuit 122 may include a direct current-direct current DC-DC conversion circuit, and a transformer is disposed in the DC-DC conversion circuit, so that charging safety can be ensured.

Each first switch circuit 140 is configured to: connect, when the first switch circuit 140 is connected, the first alternating current power supply line 110 to a power supply circuit of the corresponding first circuit group 120; and disconnect, when the first switch circuit 140 is disconnected, the first alternating current power supply line 110 from the power supply circuit of the corresponding first circuit group 120. For example, the first switch circuit 140 may include three switches 141, and one switch 141 is disposed on each phase wire. Certainly, during specific implementation, the first switch circuit 140 may further include a switch disposed on the neutral wire and/or the ground cable. This is not limited herein. Usually, the switches may not be disposed for the neutral wire and the ground cable.

For example, the switch 141 in the first switch circuit 140 may be a common switch, for example, a circuit breaker, a relay, or a contactor, in an electric power system. This is not limited herein.

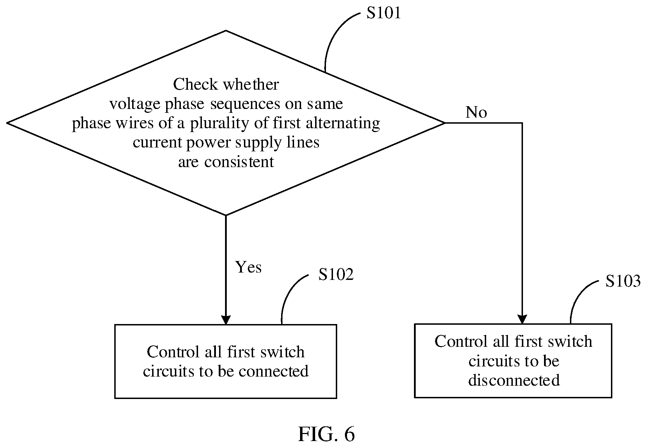

During specific implementation, there is usually no transformer in the rectifier circuit 121. Therefore, there is no transformer between the first direct current bus and the input end of each first alternating current power supply line 110. Therefore, the first direct current bus is a non-isolated direct current bus. To prevent device damage caused by inconsistent phase sequences of alternating current power supply lines, still refer to FIG. 5. The phase sequence detection circuit 150 is connected between the input end of each first alternating current power supply line 110 and the first switch circuit 140. As shown in FIG. 6, the phase sequence detection circuit 150 is configured to perform the following steps.

S101: Check whether voltage phase sequences on same phase wires of the plurality of first alternating current power supply lines 110 are consistent.

If the voltage phase sequences on the same phase wires of the plurality of first alternating current power supply lines 110 are consistent, step S102 is performed. If the voltage phase sequences on the same phase wires of the plurality of first alternating current power supply lines 110 are inconsistent, step S103 is performed.

S102: Control all first switch circuits 140 to be connected.

S103: Control all first switch circuits 140 to be disconnected.

According to the charging apparatus 100 according to embodiments of this application, the rectifier circuits 121 in all the first circuit groups 120 are all connected to the charging circuits 122 in all the first circuit groups 120 via the first direct current bus 130. The first direct current bus 130 is designed in a pooling manner, so that a photovoltaic device and an energy storage device can be superimposed on the first direct current bus 130. In addition, a method for superposing the photovoltaic device and the energy storage device is simple, cost-effective, and efficient. In addition, the phase sequence detection circuit 150 is used to detect whether phase sequences of the plurality of first alternating current power supply lines 110 are consistent. When the phase sequences are consistent, all the first switch circuits 140 are connected, or when the phase sequences are inconsistent, all the first switch circuits 140 are disconnected, so that device damage caused by an incorrect cable connection can be avoided.

In this application, a phase sequence is a sequence of three-phase alternating currents, and is determined based on a phase difference. For example, A, B, and C are used to represent the three-phase alternating currents respectively. A phase-A alternating current is 120 degrees ahead of a phase-B alternating current, the phase-B alternating current is 120 degrees ahead of a phase-C alternating current, and the phase-C alternating current is 120 degrees ahead of the phase-A alternating current. The phase sequences of the plurality of first alternating current power supply lines 110 being the same means that in the plurality of first alternating current power supply lines 110, a phase difference between the first phase wire L1 and the second phase wire L2 is the same, a phase difference between the second phase wire L1 and the third phase wire L2 is the same, and a phase difference between the third phase wire L3 and the first phase wire L1 is the same. For example, phase-A alternating currents are on all first phase wires L1 of the plurality of first alternating current power supply lines 110, phase-B alternating currents are on all second phase wires L2 of the plurality of first alternating current power supply lines 110, and phase-C alternating currents are on all third phase wires L3 of the plurality of first alternating current power supply lines 110.

For example, the phase sequence detection circuit 150 is further configured to: if the voltage phase sequences on the same phase wires of the plurality of first alternating current power supply lines 110 are inconsistent, initiate a reminder message indicating that phase sequences of three-phase alternating current voltages on the plurality of first alternating current power supply lines 110 are inconsistent, to prompt an incorrect cable connection.

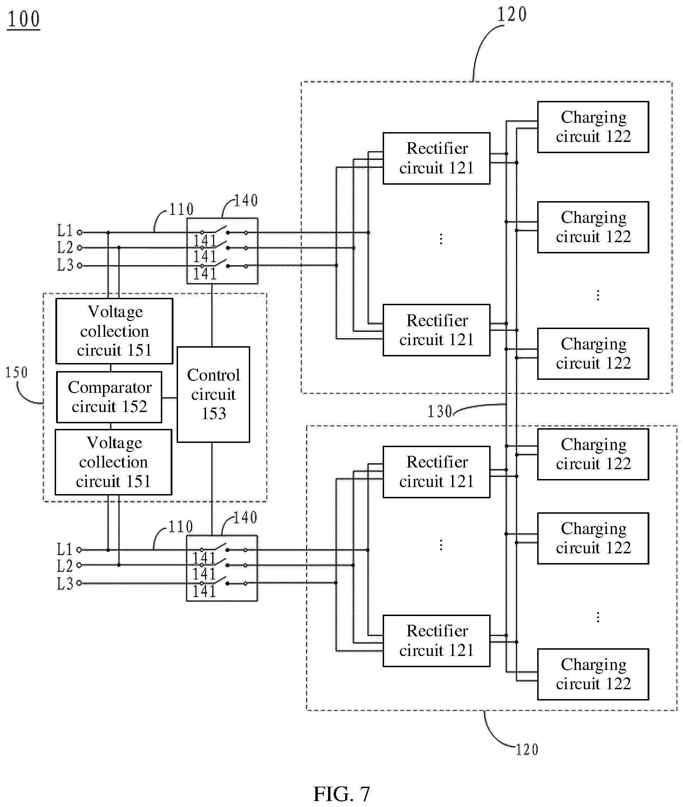

For example, FIG. 7 to FIG. 12 are schematics of structures of charging apparatuses 100 according to different embodiments of this application. The phase sequence detection circuit 150 may include a comparator circuit 152, a control circuit 153, and a plurality of voltage collection circuits 151 corresponding to the plurality of first alternating current power supply lines 110.

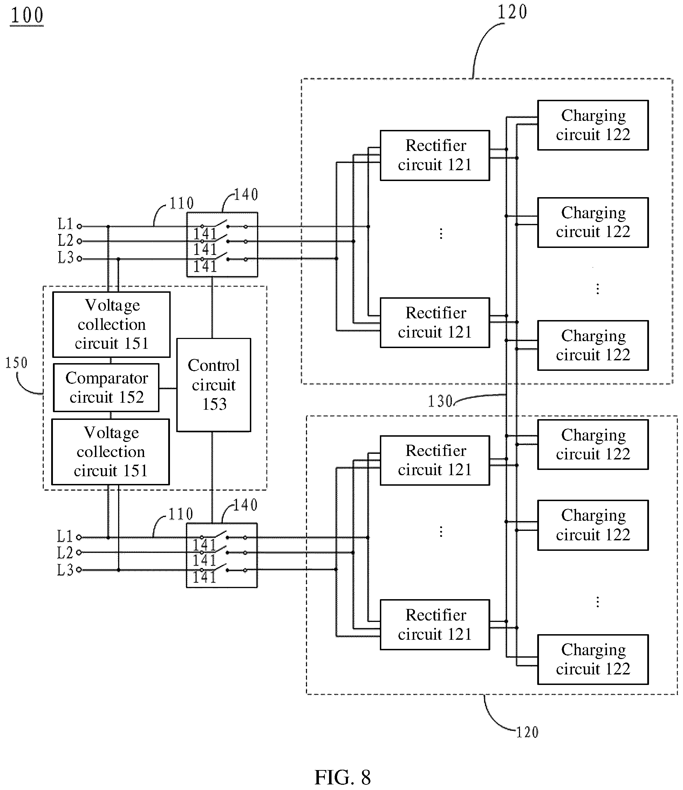

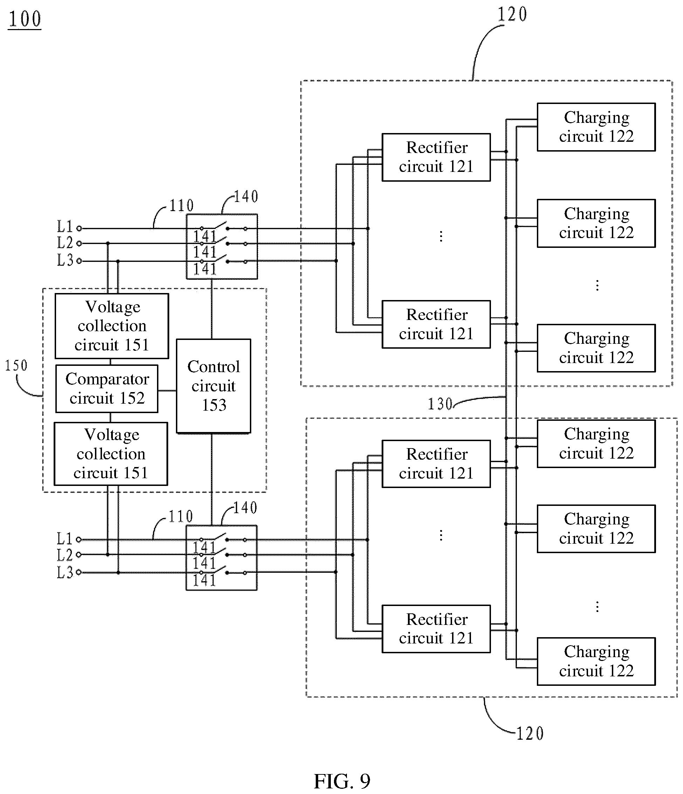

In a feasible implementation, refer to FIG. 7 to FIG. 9. Each first alternating current power supply line 110 corresponds to one voltage collection circuit 151, each voltage collection circuit 151 is connected to two phase wires of the corresponding first alternating current power supply line 110, the two phase wires that are connected to different voltage collection circuits 151 and that are of first alternating current power supply lines 110 are the same, and each voltage collection circuit 151 is configured to collect a voltage signal between the two phase wires. During specific implementation, the two phase wires connected to the voltage collection circuit may be any two of the first phase wire L1, the second phase wire L2, and the third phase wire L3. However, for example, once the voltage collection circuit 151 determines the two connected phase wires, two phase wires connected to another voltage collection circuit 151 are definitely two phase wires with a same phase sequence in the corresponding first alternating current power supply line 110. For example, as shown in FIG. 7, two voltage collection circuits 151 are separately connected to first phase wires L1 and second phase wires L2 of two first alternating current power supply lines 110. For example, as shown in FIG. 8, two voltage collection circuits 151 are separately connected to first phase wires L1 and third phase wires L3 of two first alternating current power supply lines 110. For example, as shown in FIG. 9, two voltage collection circuits 151 are separately connected to second phase wires L2 and third phase wires L3 of two first alternating current power supply lines 110.

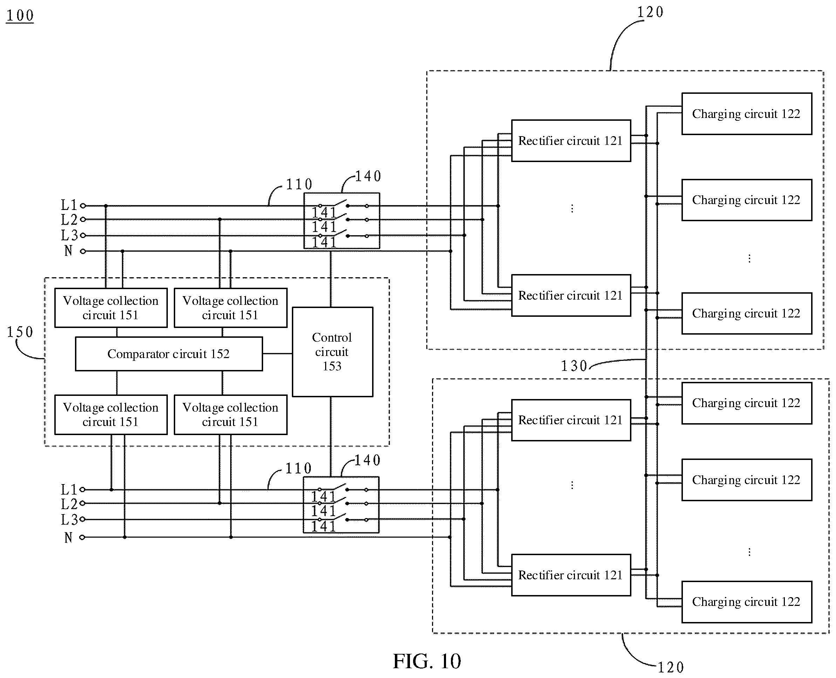

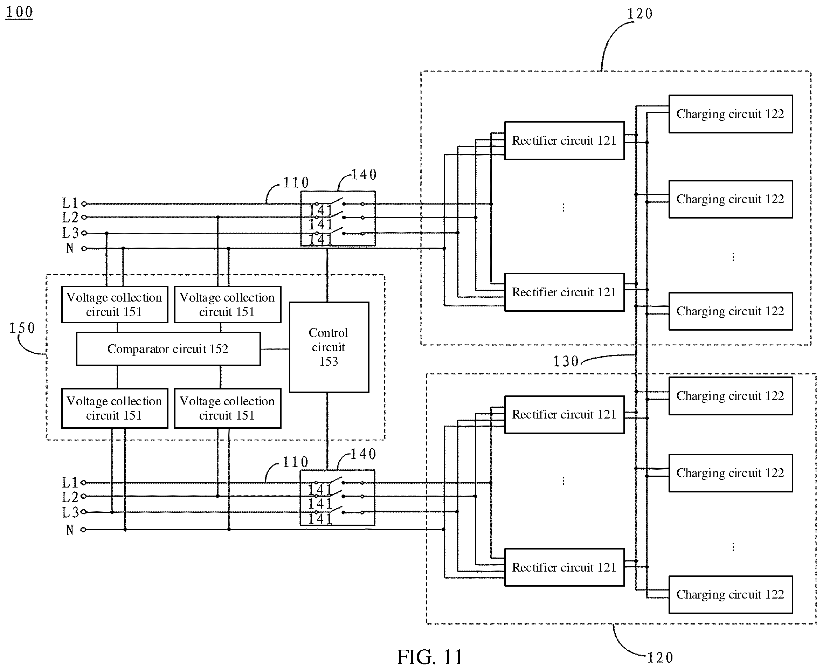

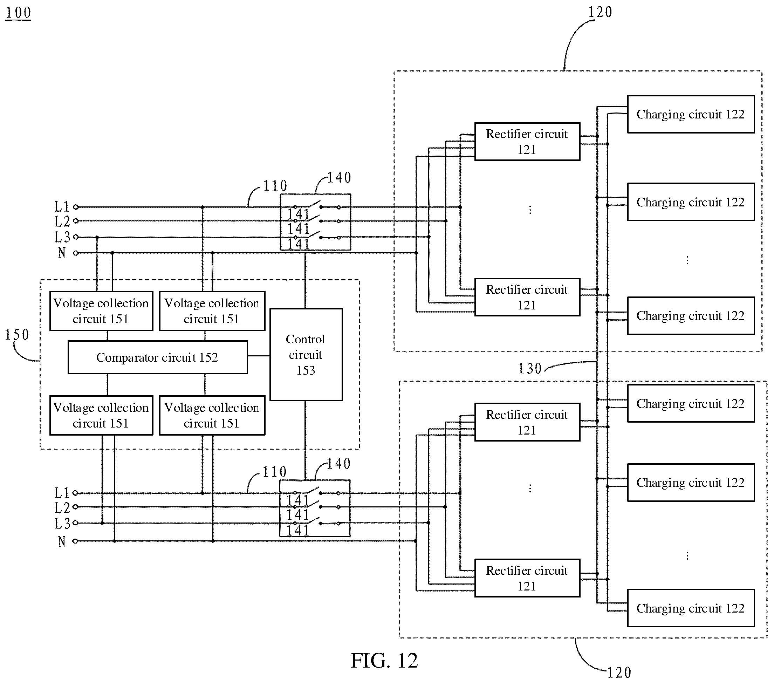

In another feasible implementation, refer to FIG. 10 to FIG. 12. Each first alternating current power supply line 110 corresponds to two voltage collection circuits 151, the two voltage collection circuits 151 are both connected to a neutral wire N and one phase wire of the corresponding first alternating current power supply line 110, and each voltage collection circuit 151 is configured to collect a voltage signal between the phase wire and the neutral wire N. The two voltage collection circuits 151 connected to the same first alternating current power supply line 110 are connected to different phase wires of the first alternating current power supply line 110, and the two phase wires that are connected to the two voltage collection circuits 151 connected to different first alternating current power supply lines 110 and that are of the first alternating current power supply lines 110 are the same. For example, in FIG. 10, in the two voltage collection circuits 151 corresponding to each first alternating current power supply line 110, one voltage collection circuit 151 is connected to the neutral wire N and the first phase wire L1, and the other voltage collection circuit 151 is connected to the neutral wire N and the second phase wire L2. For example, in FIG. 11, in the two voltage collection circuits 151 corresponding to each first alternating current power supply line 110, one voltage collection circuit 151 is connected to the neutral wire N and the second phase wire L2, and the other voltage collection circuit 151 is connected to the neutral wire N and the third phase wire L3. For example, in FIG. 12, in the two voltage collection circuits 151 corresponding to each first alternating current power supply line 110, one voltage collection circuit 151 is connected to the neutral wire N and the first phase wire L1, and the other voltage collection circuit 151 is connected to the neutral wire N and the third phase wire L3.

In embodiments of this application, after the voltage collection circuit 151 sends the collected voltage signal to the comparator circuit 152, the comparator circuit 152 determines, based on the voltage signal collected by each voltage collection circuit 151, whether waveforms of voltage signals corresponding to the same phase wires of the plurality of first alternating current power supply lines 110 are consistent; and if the waveforms of the voltage signals corresponding to the same phase wires of the plurality of first alternating current power supply lines 110 are consistent, sends first control information to the control circuit 153, or if the waveforms of the voltage signals corresponding to the same phase wires of the plurality of first alternating current power supply lines 110 are inconsistent, sends second control information to the control circuit 153. The control circuit 153 controls, after receiving the first control information sent by the comparator circuit 152, the first switch circuit 140 to be connected, or controls, after receiving the second control information, the first switch circuit 140 to be disconnected.

During specific implementation, when each first alternating current power supply line 110 corresponds to the two voltage collection circuits 151, for the two voltage collection circuits 151 of different first alternating current power supply lines 110, the comparator circuit 152 compares the voltage signals collected by the voltage collection circuits 151 that are connected to different first alternating current power supply lines 110 and that are connected to the same phase wires. For example, in FIG. 10, the comparator circuit 152 compares voltage signals collected by the voltage collection circuits 151 separately connected to first phase wires L1 in different first alternating current power supply lines 110, and compares voltage signals collected by the voltage collection circuits 151 separately connected to second phase wires L2 in different first alternating current power supply lines 110. If two groups of comparison results are both that voltage waveforms are consistent, it is considered that the waveforms of the voltage signals corresponding to the same phase wires in the plurality of first alternating current power supply lines 110 are all consistent. If waveforms of at least one of two groups of comparison results are inconsistent, it is considered that phase sequences of the voltage signals corresponding to the same phase wires in the plurality of first alternating current power supply lines 110 are inconsistent.

Further, for ease of comparison, each voltage collection circuit 151 may further convert the collected voltage signal into a digital signal, and send the digital signal to the comparator circuit 152. The comparator circuit 152 may compare, based on the received digital signal sent by each voltage collection circuit 151, whether digital signals sent by different voltage collection circuits 151 that are connected to the same phase wires of the plurality of first alternating current power supply lines 110 are consistent; and if the digital signals sent by different voltage collection circuits 151 that are connected to the same phase wires of the plurality of first alternating current power supply lines 110 are consistent, send the first control information to the control circuit 153; or if the digital signals sent by different voltage collection circuits 151 that are connected to the same phase wires of the plurality of first alternating current power supply lines 110 are inconsistent, send the second control information to the control circuit 153.

In this application, that two digital signals are consistent means that the two digital signals have a same value at any moment.

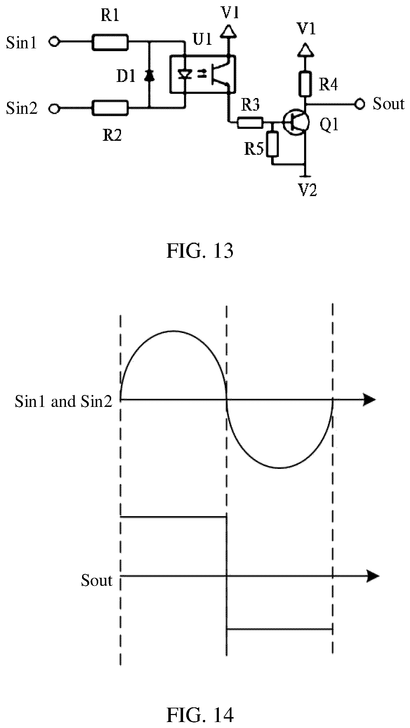

A specific structure of the voltage collection circuit 151 is not limited in this application. For example, a zero-crossing sampling circuit shown in FIG. 13 may be used. As shown in FIG. 13, the voltage collection circuit 151 may include a first resistor R1, a second resistor R2, a third resistor R3, a fourth resistor R4, a fifth resistor R5, a first diode D1, a first transistor Q1, and an optical coupler U1. The first resistor R1 is connected in series between a first input end Sin1 of the voltage collection circuit 151 and a negative electrode of the first diode D1. The second resistor R2 is connected in series between a second input end Sin2 of the voltage collection circuit 151 and a positive electrode of the first diode D1. The negative electrode of the diode is further connected to a positive electrode of a photodiode in the optical coupler U1, and the positive electrode of the first diode D1 is connected to a negative input end of the photodiode in the optical coupler U1. A collector of a transistor in the optical coupler U1 is connected to a first reference voltage end V1, and an emitter of the transistor in the optical coupler U1 is connected to a first end of the third resistor R3. A base of the first transistor Q1 is connected to a second end of the third resistor R3, a collector of the first transistor Q1 is connected to a first end of the fourth resistor R4 and an output end Sout of the voltage collection circuit 151, and an emitter of the first transistor Q1 is connected to a second reference voltage end V2. A second end of the fourth resistor R4 is connected to the first reference voltage end V1. A first end of the fifth resistor R5 is connected to the base of the first transistor Q1, and a second end of the fifth resistor R5 is connected to the emitter of the first transistor Q1. A voltage at the second reference voltage end V2 may be greater than a voltage at the first reference voltage end V1. Certainly, during specific implementation, the voltage at the second reference voltage end V2 may alternatively be less than the voltage at the first reference voltage end V1. This is not limited herein.

During specific implementation, the output end of the voltage collection circuit 151 is connected to the comparator circuit 152. When the voltage collection circuit 151 shown in FIG. 13 is used in charging apparatuses 100 shown in FIG. 7 to FIG. 9, the first input end Sin1 and the second input end Sin2 of the voltage collection circuit 151 are respectively connected to two phase wires. Phase wires connected to first input ends Sin1 of different voltage collection circuits 151 are the same, and phase wires connected to second input ends Sin2 of different voltage collection circuits 151 are the same. When the voltage collection circuit 151 shown in FIG. 13 is used in charging apparatuses 100 shown in FIG. 10 to FIG. 12, the first input end Sin1 and the second input end Sin2 of the voltage collection circuit 151 are respectively connected to a phase wire and the neutral wire N. First input ends Sin1 of different voltage collection circuits 151 are all connected to the neutral wire N, and second input ends Sin2 of different voltage collection circuits 151 are connected to the same phase wire. Alternatively, second input ends Sin2 of different voltage collection circuits 151 are all connected to the neutral wire N, and phase wires connected to first input ends Sin1 of different voltage collection circuits 151 are the same.

An example in which the voltage at the second reference voltage end V2 is greater than the voltage at the first reference voltage end V1 is used. A working principle of the voltage collection circuit 151 shown in FIG. 13 is as follows: A voltage signal between the first input end Sin1 and the second input end Sin2 of the voltage collection circuit 151 is a sine wave signal shown in FIG. 14, a positive half-cycle signal of the sine wave signal may drive the photodiode in the optical coupler U1 to emit light, and the transistor in the optical coupler U1 outputs a photocurrent to control the first transistor Q1 to output a high potential voltage. A negative half-cycle signal of the sine wave signal can pass through only the first diode D1 to drive the photodiode in the optical coupler U1 not to emit light, and the first transistor Q1 to output a low potential voltage to convert a voltage signal of a sine wave into a digital signal shown in FIG. 14.

In this application, the control circuit 153 may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the control circuit 153 may be a combination implementing a computing function, for example, a combination of one or more microprocessors, or a combination of a DSP and a microprocessor.

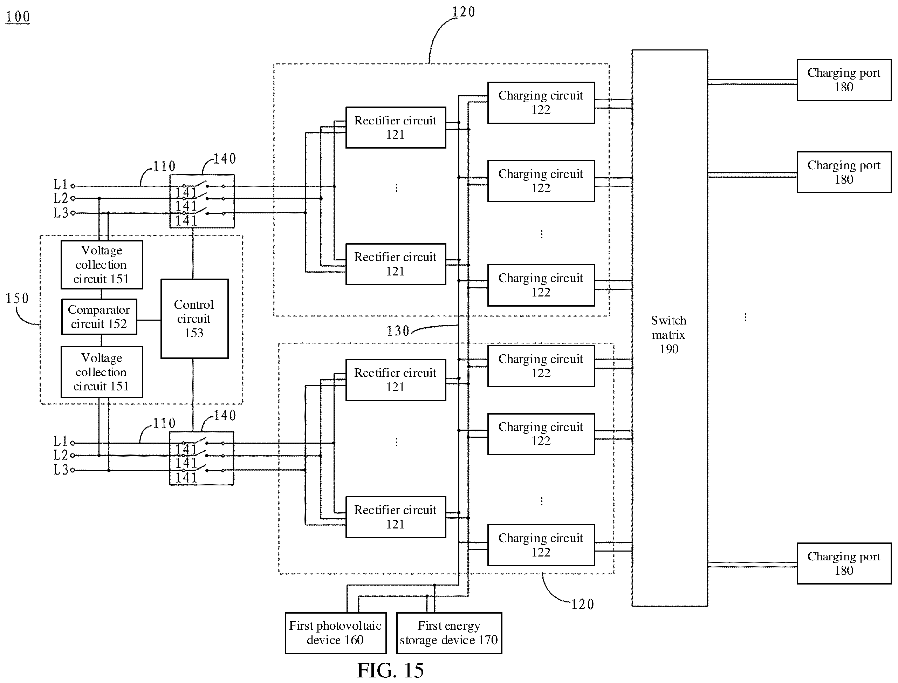

FIG. 15 is a schematic of a structure of the charging apparatus 100 according to another embodiment of this application. The charging apparatus 100 may further include a first photovoltaic device 160 connected to the first direct current bus 130. The first photovoltaic device 160 may convert light energy into electric energy and provide the electric energy for the first direct current bus 130. In this way, not only an electric capacity of the charging apparatus 100 can be increased, but also the electric energy provided by the first photovoltaic device 160 can be preferentially used in the daytime. Alternatively, it is considered that electricity prices are different in different time periods, for example, electricity prices in the daytime are far higher than electricity prices in the nighttime. The charging apparatus 100 may further include a first energy storage device 170 connected to the first direct current bus 130, the first energy storage device 170 may store electric energy when the electricity prices are low, and when the electricity prices are high, the electric energy stored in the first energy storage device 170 is preferentially used.

For example, as shown in FIG. 15, the first direct current bus 130 of the charging apparatus 100 is connected to the first photovoltaic device 160 and the first energy storage device 170. The first energy storage device 170 may not only store electric energy of a power grid, but also store the electric energy of the first photovoltaic device 160.

A specific implementation of the first photovoltaic device 160 is not limited in this application, and may be any manner that can implement a photovoltaic function.

A specific implementation of the first energy storage device 170 is not limited in this application, and may be any manner that can implement a storage function.

Still refer to FIG. 15. The charging apparatus 100 may further include a plurality of charging ports 180 and a switch matrix 190 connected between each charging circuit 122 and the plurality of charging ports 180. The switch matrix 190 is configured to: perform group scheduling on a direct current voltage output by each charging circuit 122, and correspondingly output scheduled direct current voltages to at least two charging ports 180.

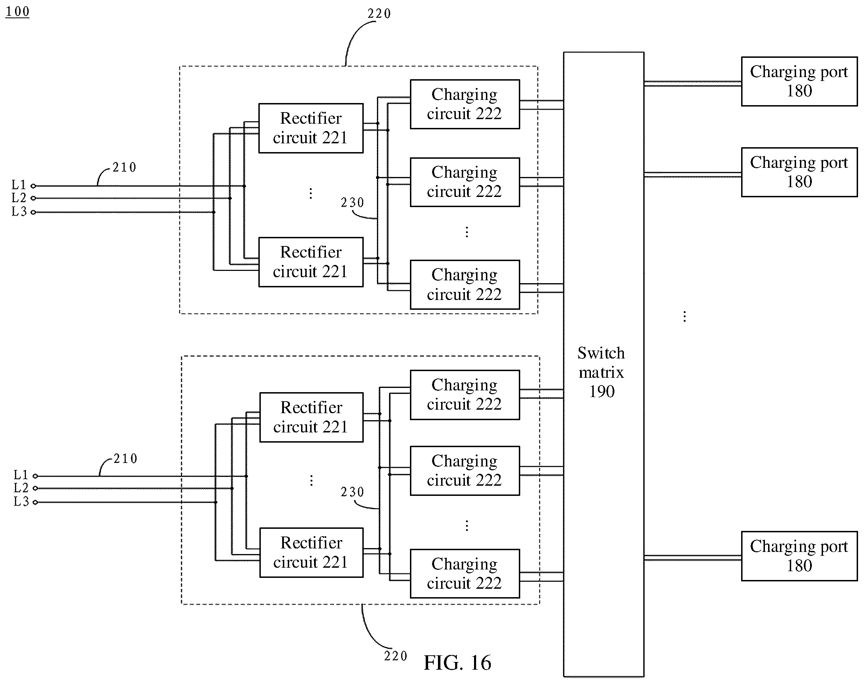

To avoid a circulating current, an embodiment of this application further provides the charging apparatus 100. Refer to FIG. 16. The charging apparatus 100 includes a plurality of second alternating current power supply lines 210, a plurality of second circuit groups 220, and a plurality of second direct current buses 230. The plurality of second alternating current power supply lines 210 are connected to the plurality of second circuit groups 220 in a one-to-one correspondence. In other words, each of the plurality of second alternating current power supply lines 210 is separately correspondingly connected to one second circuit group 220, and each of the plurality of first circuit groups 120 is separately correspondingly connected to one first alternating current power supply line 110. The plurality of second circuit groups 220 are connected to the plurality of second direct current buses 230 in a one-to-one correspondence. In other words, each of the plurality of second circuit groups 220 is separately correspondingly connected to one second direct current bus 230, and each of the plurality of second direct current buses 230 is separately correspondingly connected to one second circuit group 220.

During specific implementation, a quantity of the second alternating current power supply lines 210 and a quantity of the second circuit groups 220 are not limited in this application. There may be two second alternating current power supply lines 210 and two second circuit groups 220, three second alternating current power supply lines 210 and three second circuit groups 220, or more second alternating current power supply lines 210 and more second circuit groups 220. In the accompanying drawings of this specification, the two second alternating current power supply lines 210 and the two second circuit groups 220 are used as an example for schematic description.

Each second circuit group 220 includes a plurality of rectifier circuits 221 and a plurality of charging circuits 222, and the plurality of rectifier circuits 221 and the plurality of charging circuits 222 may be disposed in a split manner. The split disposition herein is relative to integral disposition, and means that the plurality of rectifier circuits 221 and the plurality of charging circuits 222 are physically independent of each other. For example, the plurality of rectifier circuits 221 are also disposed in the split manner, and the plurality of charging circuits 222 are also disposed in the split manner.

During specific implementation, an input end of the second alternating current power supply line 210 is configured to connect to a power supply (not shown in the figure), to receive three-phase alternating current voltages provided by the power supply. An input end of each of the plurality of rectifier circuits 221 in the second circuit group 220 is connected to an output end of the corresponding second alternating current power supply line 210, to receive the three-phase alternating current voltages provided by the second alternating current power supply line 210. An output end of each rectifier circuit 221 in the second circuit group 220 is connected to the corresponding second direct current bus 230, and an input end of each charging circuit 222 in the second circuit group 220 is connected to the corresponding second direct current bus 230. In other words, output ends of the plurality of rectifier circuits 221 in the same second circuit group 220 are all connected in parallel to the corresponding second direct current bus 230, and input ends of the plurality of charging circuits 222 in the same second circuit group 220 are all connected in parallel to the corresponding second direct current bus 230. Refer to FIG. 16. The second direct current bus 230 usually includes a positive bus and a negative bus. Each rectifier circuit 221 is configured to convert the three-phase alternating current voltages provided by the second alternating current power supply line 210 into a direct current voltage that matches the second direct current bus 230. For example, the three-phase alternating current voltages are three-phase alternating current voltages of 380 V, the direct current voltage that matches the second direct current bus 230 is a direct current voltage of 820 V, and the rectifier circuit 221 may convert the three-phase alternating current voltages of 380 V into the direct current voltage of 820 V. Each charging circuit 222 is configured to: convert the direct current voltage on the corresponding second direct current bus 230 into a target direct current voltage having a specified current and a specified voltage, and output the target direct current voltage. For example, the charging circuit 222 converts the direct current voltage of 820 V into a voltage and a current that are required by an electric vehicle, to stably charge the electric vehicle. In this application, all direct current voltages output by all the rectifier circuits 221 in the same second circuit group 220 enter each charging circuit 222 in the second circuit group 220 after the direct current voltages are pooled via the corresponding second direct current bus 230. In this application, different second alternating current power supply lines 230 are connected to different second direct current buses 210. Therefore, different second alternating current power supply lines 210 are isolated from each other, and a circulating current is not formed even if the lines are incorrectly connected.

A quantity of rectifier circuits 221 in this application may be set based on a power of the three-phase alternating current voltages on the second alternating current power supply line 210. For example, the power of the three-phase alternating current voltages is 720 kW, a conversion power of each rectifier circuit 221 is 120 kW, and six rectifier circuits 221 may be set.

A quantity of charging circuits 222 is not limited in this application. The quantity of charging circuits 222 may be the same as the quantity of rectifier circuits 221, or certainly may be different from the quantity of rectifier circuits 221. For example, the quantity of charging circuits 222 is greater than or equal to the quantity of rectifier circuits 221.

For example, the rectifier circuit 221 may include an AC-DC conversion circuit, and the charging circuit 222 may include a DC-DC conversion circuit.

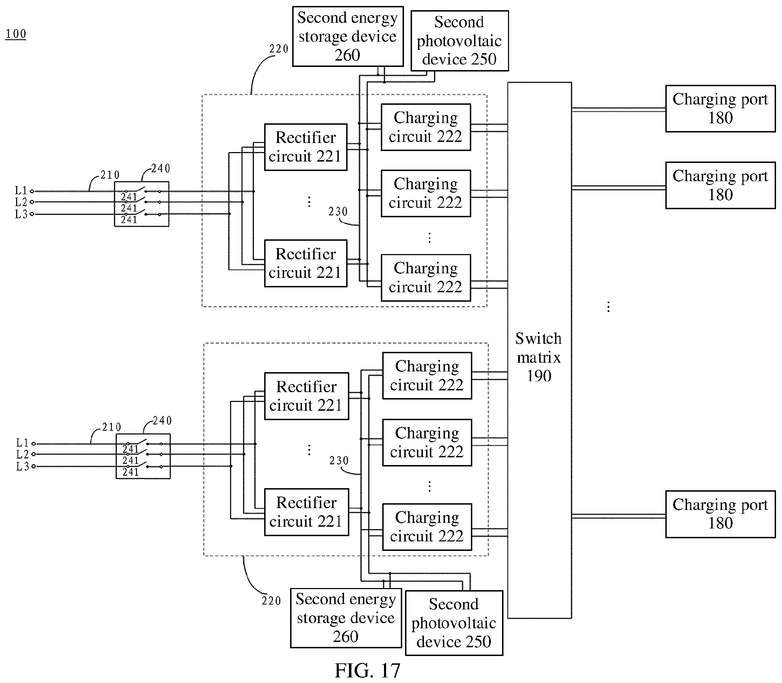

FIG. 17 is a schematic of a structure of the charging apparatus 100 according to another embodiment of this application. The charging apparatus 100 may further include at least one second photovoltaic device 250 and/or at least one second energy storage device 260, and at least one second direct current bus 230 is connected to the second photovoltaic device 250 and/or the second energy storage device 260. The second photovoltaic device 250 may convert light energy into electric energy and provide the electric energy for the second direct current bus 230. In this way, not only an electric capacity of the charging apparatus 100 can be increased, but also the electric energy provided by the first photovoltaic device 160 can be preferentially used in the daytime. It is considered that electricity prices are different in different time periods, for example, electricity prices in the daytime are far higher than electricity prices in the nighttime. The second energy storage device 260 may store electric energy when the electricity prices are low, and when the electricity prices are high, the electric energy stored in the second energy storage device 260 is preferentially used. The second energy storage device 260 may not only store electric energy of a power grid, but also store the electric energy of the second photovoltaic device 250.

A specific implementation of the second photovoltaic device 250 is not limited in this application, and may be any manner that can implement a photovoltaic function.

A specific implementation of the second energy storage device 260 is not limited in this application, and may be any manner that can implement a storage function.

Still refer to FIG. 16 and FIG. 17. The charging apparatus 100 may further include the plurality of charging ports 180 and the switch matrix 190 connected between an output end of each charging circuit 122 and the plurality of charging ports 180. The switch matrix 190 is configured to: perform group scheduling on the direct current voltage output by each charging circuit 122, and correspondingly output the scheduled direct current voltages to the at least two charging ports 180.

Still refer to FIG. 17. The charging apparatus 100 may further include a second switch circuit 240 located on at least one second alternating current power supply line 210. Each second switch circuit 240 is configured to: connect, when the second switch circuit 240 is connected, the second alternating current power supply line 210 to a power supply circuit of the corresponding second circuit group 220; and disconnect, when the second switch circuit 240 is disconnected, the second alternating current power supply line 210 from the power supply circuit of the corresponding first circuit group 120. In this way, after the input end of the second alternating current power supply line 210 is connected to the power supply, the second switch circuit 240 may be used to control a charging system to be powered on/off.

For example, the second switch circuit 240 may include three switches 241, and one switch 241 is disposed on each phase wire. Certainly, during specific implementation, the second switch circuit 240 may further include switches disposed on a neutral wire N and/or a ground cable. This is not limited herein. Usually, the switches may not be disposed for the neutral wire N and the ground cable.

For example, the switch 241 in the second switch circuit 240 may be a common switch, for example, a circuit breaker, a relay, or a contactor, in an electric power system. This is not limited herein.

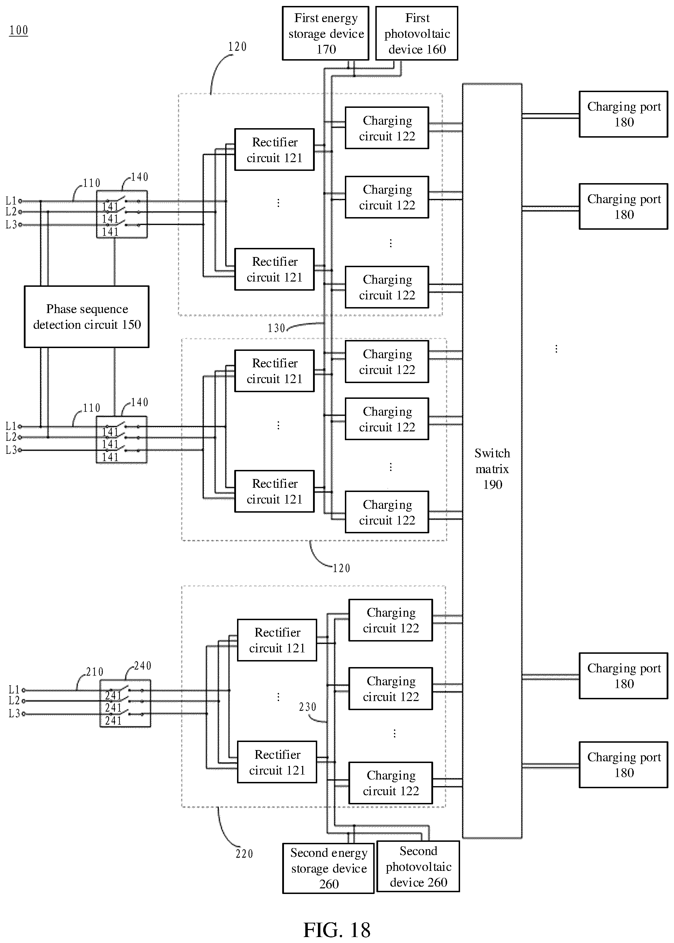

Correspondingly, an embodiment of this application further provides the charging apparatus 100. Refer to FIG. 18. The charging apparatus 100 includes the plurality of first alternating current power supply lines 110, the plurality of first circuit groups 120, the first direct current bus 130 connected to all of the plurality of first circuit groups 120, the first switch circuit 140 located between the input end and the output end of each of the plurality of first alternating current power supply lines 110, the phase sequence detection circuit 150 connected to each of the plurality of first alternating current power supply lines 110, the at least one second alternating current power supply line 210, at least one second circuit group 220, and the at least one second direct current bus 230.

The plurality of first alternating current power supply lines 110 are connected to the plurality of first circuit groups 120 in a one-to-one correspondence. Each first circuit group 120 includes the plurality of rectifier circuits 121 and the plurality of charging circuits 122. The input end of each of the plurality of rectifier circuits 121 is connected to the output end of the corresponding first alternating current power supply line 110, and the output end of each of the plurality of rectifier circuits 121 is connected to the first direct current bus 130. The input end of each of the plurality of charging circuits 122 is connected to the first direct current bus 130. Each first alternating current power supply line 110 is configured to: receive three-phase alternating current voltages, and provide the received three-phase alternating current voltages for the corresponding first circuit group 120 when the first switch circuit 140 is connected. Each first switch circuit 140 is configured to: connect, when the first switch circuit 140 is connected, the first alternating current power supply line 110 to the power supply circuit of the corresponding first circuit group 120, and disconnect, when the first switch circuit 140 is disconnected, the first alternating current power supply line 110 from the power supply circuit of the corresponding first circuit group 120.

The phase sequence detection circuit 150 is connected between the input end of each first alternating current power supply line 110 and the first switch circuit 140, and the phase sequence detection circuit 150 is configured to check whether voltage phase sequences on same phase wires of different first alternating current power supply lines 110 are consistent. If the voltage phase sequences on the same phase wires of different first alternating current power supply lines 110 are all consistent, all first switch circuits 140 are controlled to be connected; or if the voltage phase sequences on the same phase wires of different first alternating current power supply lines 110 are inconsistent, all first switch circuits 140 are controlled to be disconnected.

The at least one second alternating current power supply line 210 is connected to the at least one second circuit group 220 in a one-to-one correspondence, and the at least one second circuit group 220 is connected to the at least one second direct current bus 230 in a one-to-one correspondence. Each of the at least one second circuit group 220 includes the plurality of rectifier circuits 221 and the plurality of charging circuits 222, the input end of each of the plurality of rectifier circuits 221 is connected to the corresponding second alternating current power supply line 210, and the output end of each of the plurality of rectifier circuits 221 is connected to the corresponding second direct current bus 230. The input end of each of the plurality of charging circuits 222 is connected to the corresponding second direct current bus 230.

In this embodiment, for different first alternating current power supply lines 110, a circulating current can be avoided via the phase sequence detection circuit 150. The first alternating current power supply line 110 and the second alternating current power supply line 210 are isolated from each other, and different second alternating current power supply lines 210 are also isolated from each other. Therefore, a circulating current does not occur even if the lines are incorrectly connected.

In some examples, still refer to FIG. 18. The charging apparatus 100 may further include the first photovoltaic device 160 and/or the first energy storage device 170 connected to the first direct current bus 130.

In some examples, still refer to FIG. 18. The charging apparatus 100 may further include the at least one second photovoltaic device 250 and/or the at least one second energy storage device 260, and the at least one second direct current bus 230 is connected to the second photovoltaic device 250 and/or the second energy storage device 260.

Still refer to FIG. 18. The charging apparatus 100 may further include the second switch circuit 240 located on the at least one second alternating current power supply line 210. Each second switch circuit 240 is configured to: connect, when the second switch circuit 240 is connected, the second alternating current power supply line 210 to the power supply circuit of the corresponding second circuit group 220; and disconnect, when the second switch circuit 240 is disconnected, the second alternating current power supply line 210 from the power supply circuit of the corresponding first circuit group 120.

For example, still refer to FIG. 18. The charging apparatus 100 may further include the plurality of charging ports 180 and the switch matrix 190 connected between the output end of each charging circuit 122 and the plurality of charging ports 180. The switch matrix 190 is configured to: perform group scheduling on the direct current voltage output by each charging circuit 122, and correspondingly output the scheduled direct current voltages to the at least two charging ports 180.

During specific implementation, for setting of each circuit in this embodiment, refer to setting of each circuit in the foregoing embodiments in FIG. 5 to FIG. 17. Details are not described herein again.

It should be noted that "first" and "second" in this application are merely used to distinguish between different circuits, and are not intended to limit the circuits. For example, the first alternating current power supply line and the second alternating current power supply line indicate that the first alternating current power supply line is an alternating current power supply line different from the second alternating current power supply line.

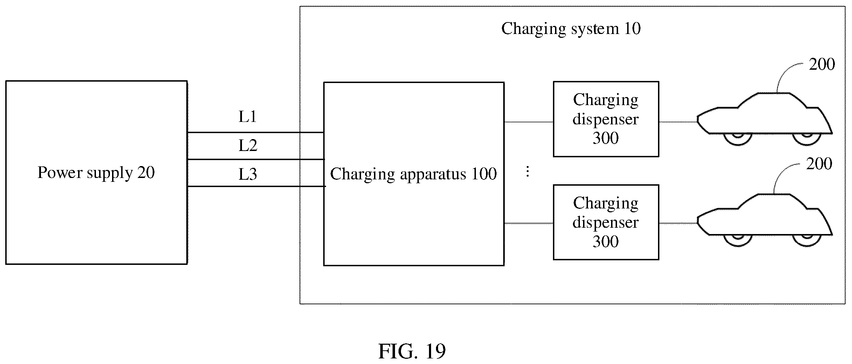

FIG. 19 is a diagram of a structure of a charging system 10 according to an embodiment of this application. The charging system 10 provided in this embodiment of this application may include any one of the foregoing charging apparatuses 100 provided in embodiments of this application and at least one charging dispenser 300 connected to the charging apparatus 100. Each of the at least one charging dispenser 300 is separately configured to connect to an electric vehicle 200, and the charging apparatus 100 may charge, via each charging dispenser 300, the electric vehicle 200 connected to the charging dispenser 300. During specific implementation, each charging dispenser 300 is connected to at least one charging circuit in the charging apparatus. In an embodiment, the charging apparatus 100 further includes the charging port 180, and the charging apparatus 100 may be connected to the charging dispenser via the charging port 180. When the charging apparatus 100 in the charging system 10 is connected to a power supply 20, if there is an incorrect cable connection, a case in which the charging apparatus 100 has the plurality of first alternating current power supply lines 110 may be detected via the phase sequence detection circuit 150. In a case in which the charging apparatus 100 has the plurality of second alternating current power supply lines 210, the plurality of second alternating current power supply lines 210 are isolated from each other. Therefore, a circulating current does not occur even if the lines are incorrectly connected. In a case in which the charging apparatus 100 has the first alternating current power supply line 110 and the second alternating current power supply line 210, the first alternating current power supply line 110 and the second alternating current power supply line 210 are isolated from each other. Therefore, a circulating current does not occur even if the lines are incorrectly connected.

A quantity of charging dispensers 300 is not limited in this application, and may be specifically set based on a quantity of charging ports. Usually, one charging port corresponds to one charging dispenser 300. The charging port of the charging apparatus 100 is connected to the corresponding charging dispenser 300. When the electric vehicle 200 needs to be charged, the electric vehicle 200 is connected to the charging dispenser 300.

For example, the charging dispenser 300 mainly includes a housing, a human machine interface, a charging control unit, a metering and billing unit, and the like. The charging dispenser 300 is configured to perform information exchange, energy transmission, metering and billing, and the like with the electric vehicle 200.

For example, still refer to FIG. 19. The charging system 10 may further include at least one electric vehicle 200 connected to the at least one charging dispenser 300, so that the charging apparatus 100 charges the electric vehicle 200 via the charging dispenser 300.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A charging apparatus, comprising a plurality of first alternating current power supply lines, a plurality of first circuit groups, a first direct current bus connected to all of the plurality of first circuit groups, a first switch circuit located between an input end and an output end of each of the plurality of first alternating current power supply lines, and a phase sequence detection circuit connected to each of the plurality of first alternating current power supply lines, wherein
the plurality of first alternating current power supply lines are connected to the plurality of first circuit groups in a one-to-one correspondence;
each first circuit group comprises a plurality of rectifier circuits and a plurality of charging circuits, an input end of each of the plurality of rectifier circuits is connected to the output end of the corresponding first alternating current power supply line, an output end of each of the plurality of rectifier circuits is connected to the first direct current bus, and an input end of each of the plurality of charging circuits is connected to the first direct current bus;
each first alternating current power supply line is configured to receive three-phase alternating current voltages;
the phase sequence detection circuit is connected between the input end of each first alternating current power supply line and the first switch circuit, and the phase sequence detection circuit is configured to check whether voltage phase sequences on same phase wires of the plurality of first alternating current power supply lines are consistent; and
if the voltage phase sequences on the same phase wires of the plurality of first alternating current power supply lines are all consistent, all first switch circuits are controlled to be connected; or
if the voltage phase sequences on the same phase wires of the plurality of first alternating current power supply lines are inconsistent, all first switch circuits are controlled to be disconnected.

2. The charging apparatus according to claim 1, wherein the phase sequence detection circuit is further configured to:
if the voltage phase sequences on the same phase wires of the plurality of first alternating current power supply lines are inconsistent, initiate a reminder message indicating that phase sequences of three-phase alternating current voltages on the plurality of first alternating current power supply lines are inconsistent.

3. The charging apparatus according to claim 1 or 2, wherein the phase sequence detection circuit comprises a comparator circuit, a control circuit, and a plurality of voltage collection circuits corresponding to the plurality of first alternating current power supply lines;
each first alternating current power supply line corresponds to one voltage collection circuit, each voltage collection circuit is connected to two phase wires of the corresponding first alternating current power supply line, the two phase wires that are connected to the plurality of voltage collection circuits and that are of the first alternating current power supply lines are the same, and each voltage collection circuit is configured to collect a voltage signal between the two phase wires; or each first alternating current power supply line corresponds to two voltage collection circuits, the two voltage collection circuits are both connected to a neutral wire and one phase wire of the corresponding first alternating current power supply line, the two voltage collection circuits are connected to different phase wires of the first alternating current power supply line, the two phase wires that are connected to the two voltage collection circuits connected to different first alternating current power supply lines and that are of the first alternating current power supply lines are the same, and each voltage collection circuit is configured to collect a voltage signal between the phase wire and the neutral wire;
the comparator circuit is configured to: determine, based on the voltage signal collected by each voltage collection circuit, whether waveforms of voltage signals corresponding to the same phase wires of the plurality of first alternating current power supply lines are consistent; and if the waveforms of the voltage signals corresponding to the same phase wires of the plurality of first alternating current power supply lines are consistent, send first control information to the control circuit, or if the waveforms of the voltage signals corresponding to the same phase wires of the plurality of first alternating current power supply lines are inconsistent, send second control information to the control circuit; and
the control circuit is configured to: control, after receiving the first control information sent by the comparator circuit, the first switch circuit to be connected, or control, after receiving the second control information, the first switch circuit to be disconnected.

4. The charging apparatus according to claim 3, wherein each voltage collection circuit is further configured to: convert the collected voltage signal into a digital signal, and send the digital signal to the comparator circuit; and the comparator circuit is specifically configured to:
receive the digital signal sent by each voltage collection circuit, and compare whether digital signals sent by different voltage collection circuits that are connected to the same phase wires of the plurality of first alternating current power supply lines are consistent; and
if the digital signals sent by different voltage collection circuits that are connected to the same phase wires of the plurality of first alternating current power supply lines are consistent, send the first control information to the control circuit; or
if the digital signals sent by different voltage collection circuits that are connected to the same phase wires of the plurality of first alternating current power supply lines are inconsistent, send the second control information to the control circuit.

5. The charging apparatus according to claim 4, wherein the voltage collection circuit comprises a first resistor, a second resistor, a third resistor, a fourth resistor, a fifth resistor, a first diode, a first transistor, and an optical coupler, wherein
the first resistor is connected in series between a first input end of the voltage collection circuit and a negative electrode of the first diode; the second resistor is connected in series between a second input end of the voltage collection circuit and a positive electrode of the first diode; the negative electrode of the diode is further connected to a positive electrode of a photodiode in the optical coupler, and the positive electrode of the first diode is connected to a negative input end of the photodiode in the optical coupler; a collector of a transistor in the optical coupler is connected to a first reference voltage end, and an emitter of the transistor in the optical coupler is connected to a first end of the third resistor; a base of the first transistor is connected to a second end of the third resistor, a collector of the first transistor is connected to a first end of the fourth resistor and an output end of the voltage collection circuit, and an emitter of the first transistor is connected to a second reference voltage end; a second end of the fourth resistor is connected to the first reference voltage end; and a first end of the fifth resistor is connected to the base of the first transistor, and a second end of the fifth resistor is connected to the emitter of the first transistor.

6. The charging apparatus according to any one of claims 1 to 5, wherein the charging apparatus further comprises a first photovoltaic device and/or a first energy storage device that are/is connected to the first direct current bus.

7. The charging apparatus according to any one of claims 1 to 6, wherein each first switch circuit is configured to: connect, when the first switch circuit is connected, the first alternating current power supply line to a power supply circuit of the corresponding first circuit group; and disconnect, when the first switch circuit is disconnected, the first alternating current power supply line from the power supply circuit of the corresponding first circuit group;
each rectifier circuit in the first circuit group is configured to convert the three-phase alternating current voltages provided by the first alternating current power supply line into a direct current voltage that matches the first direct current bus; and
each charging circuit in the plurality of first circuit groups is configured to: convert the direct current voltage on the first direct current bus into a target direct current voltage having a specified current and a specified voltage, and output the target direct current voltage.

8. The charging apparatus according to claim 7, wherein the rectifier circuit comprises an AC-DC conversion circuit, and the charging circuit comprises a DC-DC conversion circuit.

9. The charging apparatus according to any one of claims 1 to 8, wherein the charging apparatus further comprises at least one second alternating current power supply line, at least one second circuit group connected to the at least one second alternating current power supply line in a one-to-one correspondence, and at least one second direct current bus connected to the at least one second circuit group in a one-to-one correspondence;
each of the at least one second circuit group comprises a plurality of rectifier circuits and a plurality of charging circuits;
an input end of each rectifier circuit in each second circuit group is connected to the corresponding second alternating current power supply line, and an output end of each rectifier circuit is connected to the corresponding second direct current bus; and
an input end of each charging circuit in each second circuit group is connected to the corresponding second direct current bus.

10. The charging apparatus according to claim 9, wherein the charging apparatus further comprises at least one second photovoltaic device and/or at least one second energy storage device; and
the at least one second direct current bus is connected to the second photovoltaic device and/or the second energy storage device.

11. The charging apparatus according to claim 9 or 10, wherein each second alternating current power supply line is configured to: receive the three-phase alternating current voltages, and provide the received three-phase alternating current voltages for each rectifier circuit in the corresponding second circuit group;
each rectifier circuit in the second circuit group is configured to convert the three-phase alternating current voltages provided by the second alternating current power supply line into a direct current voltage that matches the second direct current bus; and
each charging circuit in the second circuit group is configured to: convert the direct current voltage on the second direct current bus into a target direct current voltage having a specified current and a specified voltage, and output the target direct current voltage.

12. The charging apparatus according to any one of claims 9 to 11, wherein the charging apparatus further comprises a second switch circuit located on the at least one second alternating current power supply line; and
each second switch circuit is configured to: connect, when the second switch circuit is connected, the second alternating current power supply line to a power supply circuit of the corresponding second circuit group; and disconnect, when the second switch circuit is disconnected, the second alternating current power supply line from the power supply circuit of the corresponding first circuit group.

13. The charging apparatus according to any one of claims 1 to 12, wherein the charging apparatus further comprises a plurality of charging ports and a switch matrix connected between each charging circuit and the plurality of charging ports; and
the switch matrix is configured to: perform group scheduling on the direct current voltage output by each charging circuit, and correspondingly output scheduled direct current voltages to at least two charging ports.

14. A charging apparatus, comprising a plurality of alternating current power supply lines, a plurality of circuit groups that are connected to the plurality of alternating current power supply lines in a one-to-one correspondence, and a plurality of direct current buses that are connected to the plurality of circuit groups in a one-to-one correspondence, wherein
each of the plurality of circuit groups comprises a plurality of rectifier circuits and a plurality of charging circuits;
an input end of each of the plurality of rectifier circuits is connected to the corresponding alternating current power supply line, and an output end of each of the plurality of rectifier circuits is connected to the corresponding direct current bus; and
an input end of each of the plurality of charging circuits is connected to the corresponding direct current bus.

15. The charging apparatus according to claim 14, wherein the charging apparatus further comprises at least one photovoltaic device and/or at least one energy storage device; and
at least one direct current bus is connected to the photovoltaic device and/or the energy storage device.

16. The charging apparatus according to claim 14 or 15, wherein the charging apparatus further comprises a plurality of charging ports and a switch matrix connected between each charging circuit and the plurality of charging ports; and
the switch matrix is configured to enable each charging port to correspond to output ends of at least two charging circuits.

17. The charging apparatus according to any one of claims 14 to 16, wherein each alternating current power supply line is configured to: receive three-phase alternating current voltages, and provide the received three-phase alternating current voltages for each rectifier circuit in the corresponding circuit group;
each rectifier circuit in the circuit group is configured to convert the three-phase alternating current voltages provided by the alternating current power supply line into a direct current voltage that matches the direct current bus; and
each charging circuit in the circuit group is configured to: convert the direct current voltage on the direct current bus into a target direct current voltage having a specified current and a specified voltage, and output the target direct current voltage.

18. The charging apparatus according to any one of claims 14 to 17, wherein the charging apparatus further comprises a switch circuit located on at least one alternating current power supply line; and
each switch circuit is configured to: connect, when the switch circuit is connected, the alternating current power supply line to a power supply circuit of the corresponding circuit group; and disconnect, when the switch circuit is disconnected, the alternating current power supply line from the power supply circuit of the corresponding first circuit group.

19. A charging system, comprising a charging apparatus and at least one charging dispenser connected to the charging apparatus, wherein
each of the at least one charging dispenser is separately configured to connect to an electric vehicle, and the charging apparatus is configured to charge, via each charging dispenser, the electric vehicle connected to the charging dispenser; and
the charging apparatus comprises a plurality of first alternating current power supply lines, a plurality of first circuit groups, a first direct current bus connected to all of the plurality of first circuit groups, a first switch circuit located between an input end and an output end of each of the plurality of first alternating current power supply lines, and a phase sequence detection circuit connected to each of the plurality of first alternating current power supply lines, wherein the plurality of first alternating current power supply lines are connected to the plurality of first circuit groups in a one-to-one correspondence; each first circuit group comprises a plurality of rectifier circuits and a plurality of charging circuits, an input end of each of the plurality of rectifier circuits is connected to the output end of the corresponding first alternating current power supply line, an output end of each of the plurality of rectifier circuits is connected to the first direct current bus, and an input end of each of the plurality of charging circuits is connected to the first direct current bus; each first alternating current power supply line is configured to receive three-phase alternating current voltages; the phase sequence detection circuit is connected between the input end of each first alternating current power supply line and the first switch circuit, and the phase sequence detection circuit is configured to check whether voltage phase sequences on same phase wires of the plurality of first alternating current power supply lines are consistent; and if the voltage phase sequences on the same phase wires of the plurality of first alternating current power supply lines are all consistent, all first switch circuits are controlled to be connected; or if the voltage phase sequences on the same phase wires of the plurality of first alternating current power supply lines are inconsistent, all first switch circuits are controlled to be disconnected, wherein each charging dispenser is connected to at least one charging circuit; or
the charging apparatus comprises a plurality of alternating current power supply lines, a plurality of circuit groups that are connected to the plurality of alternating current power supply lines in a one-to-one correspondence, and a plurality of direct current buses that are connected to the plurality of circuit groups in a one-to-one correspondence, wherein each of the plurality of circuit groups comprises a plurality of rectifier circuits and a plurality of charging circuits; an input end of each of the plurality of rectifier circuits is connected to the corresponding alternating current power supply line, and an output end of each of the plurality of rectifier circuits is connected to the corresponding direct current bus; and an input end of each of the plurality of charging circuits is connected to the corresponding direct current bus, wherein each charging dispenser is connected to at least one charging circuit.

20. The charging system according to claim 19, wherein the charging system further comprises at least one electric vehicle connected to the at least one charging dispenser.
